(19) Europäisches Patentamt
European Patent Office
Office européen des brevets

(11) **EP 0 987 322 B1**

(12) **EUROPÄISCHE PATENTSCHRIFT**

(45) Veröffentlichungstag und Bekanntmachung des Hinweises auf die Patenterteilung:
**31.12.2008   Patentblatt 2009/01**

(51) Int Cl.:
*C12C 7/14* *(2006.01)*       *C12C 7/16* *(2006.01)*

(21) Anmeldenummer: **99109690.0**

(22) Anmeldetag: **17.05.1999**

(54) **Verfahren  zur Regelung des Würzeabflusses aus einem Läuterbottich**

Procedure  for controlling the outflow of wort from a straining vat

Procédé pour le contrôle de l'évacuation de moût d'une cuve-filtre

(84) Benannte Vertragsstaaten:
**AT BE DE NL**

(30) Priorität: **30.05.1998   DE 19824433**

(43) Veröffentlichungstag der Anmeldung:
**22.03.2000   Patentblatt 2000/12**

(73) Patentinhaber: **A. Ziemann GmbH Maschinenfabrik**
**71636 Ludwigsburg (DE)**

(72) Erfinder:
• **Blessing, Peter**
**74078 Heilbronn (DE)**
• **Rahm, Martin**
**70565 Stuttgart (DE)**

(74) Vertreter: **Kastner, Hermann**
**Patentanwalt**
**Rieslingweg 5**
**71720 Oberstenfeld (DE)**

(56) Entgegenhaltungen:
**DE-A- 4 324 157**        **DE-A- 19 610 447**
**US-A- 4 990 346**

**Beschreibung**

Die Erfindung betrifft ein Verfahren zur Regelung eines optimalen Würzeabflusses aus einem Läuterbottich.

Ein Verfahren zur Regelung des Würzeabflusses bei der Erzeugung von Bier ist z.B. aus der Patentanmeldung EP-A-0362793 bekannt. Bei diesem Verfahren wird der Volumenstrom des Würzeabflusses gemessen und mit einer vorgebbaren Führungsgröße verglichen. In Abhängigkeit von der Differenz wird die Höhenlage der Hackvorrichtung durch Anheben oder Absenken verändert. Dadurch wird die Treberschicht aufgelockert und es kann die Abzugsgeschwindigkeit erhöht werden. Hiermit kann insgesamt die Zeit für das Abläutern verkürzt werden. Trotz dieser Maßnahme bleibt dennoch der Läutervorgang der zeitintensivste Abschnitt bei der Würzeherstellung. Hinsichtlich einer möglichst hohen Sudfolge ist damit eine Verkürzung der Läuterzeit bei gleichbleibender Produktqualität oberste Zielsetzung.

In der Offenlegungsschrift DE 43 24 157 A1 wird ein Verfahren vorgestellt, das im Verlauf des Gesamtablaufes eines Sudes in wenigstens einer Phase einen erhöhten Volumenstrom der Würze einstellt, mit dessen Hilfe eine neuerliche Ermittlung der Führungsgröße erfolgen kann. Doch auch bei diesem Verfahren kann nicht die minimale Zeit für die Durchführung des Läuterprozesses bei konstanter Produktqualität erreicht werden.

In der Patentschrift DD 139480 wird eine einfache Methode zur Regelung dargestellt, die unter Verwendung eines Differenzdruckmessgeräts, eines Durchflussmessgerätes und eines Leitfähigkeitsmessgeräts eine kurze Läuterzeit und eine betriebswirtschaftlich günstige Beendigung des Läuterprozesses sicherstellen soll.

In der Patentschrift DE 38 44 389 C1 werden die Höhenbewegungen bzw. die Höhenlage der umlaufenden Hackvorrichtung in Abhängigkeit vom Geschehen im Läuterbottich gesteuert.

Dabei wird die Bewegung der Höhenlage in Abhängigkeit vom Durchfluss der Läuterwürze bzw. vom Differenzdruck automatisch geregelt.

In der DE 196 10 447 A1 wird ein Verfahren zur automatischen Läuterführung dargestellt, bei der zunächst eine Vorberechnung der Sollwerte durch die Durchführung eines Vortests beim Trübwürzepumpen erfolgt. Danach wird während des gesamten Abläuterns der Niveauunterschied zwischen dem Flüssigkeitsstand im Läuterbottich und dem Niveauhaltegefäß konstant gehalten. Mittels dieses Verfahrens lassen sich jedoch nicht die differenzierten Anforderungen an den Läuterprozess hinsichtlich Verfahrensdauer, Würzequalität und Wirkungsgrad erfüllen.

Die Verfahrensdauer des Läuterprozesses wird beeinflusst durch den Wert des Volumenstromes (Volumen pro Zeiteinheit) mit dem die Läuterwürze in den Prozessabschnitten Vorderwürze und Nachguss aus dem Läuterbottich abgezogen wird, der Anzahl der Tiefschnitte, die zur Auflockerung des Treberkuchens erforderlich werden, und der Höhenlage und Drehzahl der Hackvorrichtung. Während der Zeitdauer der Tiefschnitte wird keine Läuterwürze abgezogen. Bei den bisher bekannten Verfahren werden die o.a. Regelgrößen auf vorgegebene Führungsgrößen geregelt, die auf Erfahrungswerten basieren.

Aufgabe dieser Erfindung ist es, den Läuterprozess hinsichtlich der Verfahrensdauer weiter zu verkürzen und / oder in bezug auf die Ausbeute (Wirkungsgrad) sowie die Würzequalität (z.B. Trübung) zu verbessern. Dies soll unabhängig vom Biertyp, von der Qualität und Beschaffenheit der Rohstoffe und der Größe der spezifischen Schüttung im Läuterbottich gelöst werden. Diese Aufgabe wird durch eines der in den Ansprüchen 1 und 2 dargestellten Verfahren gelöst und durch die Ausgestaltungen in den Ansprüchen 3 bis 15 verfeinert.

Die Erfindung ermittelt die Stellgrößen auf eine selbstlernende Weise, so dass optimale Regelgrößen im Sinne des Erfindungszieles entstehen. Sie ist damit in der Lage, sich an geänderte Prozessgrößen selbsttätig anzupassen und zwar ohne manuelle Eingriffe z.B. in Form von geänderten Erfahrungswerten. Das dargestellte Verfahren baut dabei auf der in der Vergangenheit bei vergleichbarer Malzqualität ermittelten Reglerstrategie auf.

Grundlage des aus Anspruch 1 abgeleiteten Verfahren ist ein mathematisches Modell des realen Läuterprozesses einschließlich der Stelleinrichtungen. Dieses Modell ist formuliert in Form von Differenzengleichungen zu äquidistanten Abtastzeitpunkten. Es beschreibt die statischen und dynamischen Zusammenhänge zwischen den messbaren Ausgangsgrößen (Läuterdruck, Trübung und Konzentration der Läuterwürze) und den Prozessstellgrößen (Volumenstrom der Läuterwürze, Höhenlage und Drehzahl der Hackvorrichtung) unter Berücksichtigung weiterer Messgrößen des Läuterprozesses (z.B. Volumenstrom und Konzentration des Trubs, Volumenstrom des Anschwänzwassers sowie Temperatur der Läuterwürze und des Anschwänzwassers). Die im Modell enthaltenen Verfahrensparameter werden mittels konstruktiver Daten des Läuterbottichs, durch Expertenwissen, durch theoretische Analyse oder Auswertung dynamischer Messungen der Stellgrößen, Ausgangsgrößen und Meßgrößen bestimmt. Das Modell beschreibt den gesamten Läuterprozess, der sich von der Vorderwürzegewinnung bis zu den Nachgüssen erstreckt. Das mathematische Modell des realen Prozesses einschließlich der Stelleinrichtungen wird in der Automatisierungsvorrichtung abgebildet. Es kommen unterschiedliche Modelle für die verschiedenen Phasen und Prozeßabschnitte des Läuterprozesses und die verschiedenen Biersorten zum Einsatz.

Mittels dieses Modells kann der Einfluß von aktuellen und angenommenen zukünftigen Stellgrößen auf das zukünftige Verhalten der Ausgangsgrößen des Läuterprozesses im voraus berechnet werden. Da sich einige Verfahrensparameter mit der Zeit ändern und zudem messtechnisch nicht erfassbar sind (z.B. Druckänderung in der Treberschicht), können diese bei Anwendung eines Verfahrens gemäß Anspruch 1 adaptiert werden.

Die Differenzen zwischen den Messungen von Läuterdruck, Trübung und Konzentration und den Schätzwerten dieser Größen können zur Adaption der zeitveränderlichen und/oder nicht einfach meßbaren Parameter genutzt werden. Die Parameteranpassung erfolgt durch Einsatz eines vorzugsweise skalaren Gütekriteriums, das im Sinne eines zu verkleinernden Fehlers sich eignet, z.B. Summe der Fehlerquadrate. Die Berechnung der verbesserten Modellarameter erfolgt unter Nutzung der aktuellen Stell- und Ausgangsgrößen des Prozesses und aus den zuvor berechneten Prozeßparametern, z.B. mittels eines iterativen Gradientenverfahrens. Die Anpassung der Parameter kann nach jedem Abtastschritt oder nach vorher festgelegten Zeitabschnitten oder selbsttätig bei Überschreitung einer Fehlergrenze durchgeführt werden.

Das Verfahren ermittelt zu Aktionszeitpunkten die optimalen elektrischen Stellgrößen für den Volumenstrom der Läuterwürze, für die Höhenlage und für die Drehzahl der Hackvorrichtung und - sofern überhaupt erforderlich - die Zeitpunkte des Tiefschnittbeginnes, so daß die Regelgrößen Volumenstrom der Läuterwürze, Höhenlage und Drehzahl der Hackvorrichtung zu einer minimalen Gesamtläuterzeit führen und/oder die Ausbeute sowie die Würzequalität verbessert werden. Hierbei sind bei Ende des Vorderwürzeablaufes und des Nachgussablaufes die Grenzwerte für den Läuterdruck einzuhalten. Vorzugsweise werden Stellgrößen verwendet, die bis zum nächsten Aktionszeitpunkt konstant sind oder mit konstanter Steigung anwachsen bzw. abfallen. Zur Bewertung der Güte eines Stelleingriffes wird ein skalares Optimierungskriterium genutzt. Dieses Kriterium, das durch Ausgabe geeigneter Stellgrößen zu minimieren ist, berücksichtigt relevante Faktoren des Läuter-prozesses (Zeitdauer, Trübung, Ausbeute) und/oder Abweichungen von kritischen Prozeßzuständen mit unterschiedlichen Gewichtungen. Diese Gewichtungen können in der Brauerei - z.B. produktionsspezifisch - eingestellt und verändert werden. Es sind unterschiedliche Gewichtungen der Gütefaktoren für die verschiedenen Prozeßabschnitte möglich.

Die Aktionszeitpunkte können bei jedem Abtastpunkt sein oder nur in größeren Zeitabschnitten auftreten oder auch durch Prozeßzustände initiiert werden, z.B. durch den Wert oder die zeitliche Ableitung einer Ausgangsgröße des Läuterprozesses. Die Ausgabe der optimierten Stellgrößen erfolgt zu jedem Abtastschritt oder es können auch lediglich die Veränderungen der Stellgrößen an den Entscheidungszeitpunkten ausgegeben werden.

Im Verfahren gemäß Anspruch 1 wird in der Automatisierungsvorrichtung in den Aktionszeitpunkten mittels des Modells im voraus überprüft, ob diese Grenzwerte durch Änderung der Stellgrößen oder auch durch Einsatz eines Tiefschnittes eingehalten werden und welche Varianten der Stellgrößen das gewählte Optimierungskriterium minimieren.

Das mathematische Modell berechnet hierzu zu jedem Aktionszeitpunkt das dynamische und statische Verhalten des Läuterprozesses im voraus. Es können damit die Auswirkungen der geplanten Stelleingriffe auf den realen Läuterprozess durch die Simulation mittels des mathematischen Modells bereits vorher ermittelt, bewertet, korrigiert und damit sukzessive verbessert werden. Mittels dieses Modells erreicht man eine optimale Strategie zur Ansteuerung der bei einem Läuterprozess typischen Stellgrößen: Höhenlage und Drehzahl der Hackvorrichtung, Volumenstrom der Läuterwürze und der Teilvolumenströme in den Ringleitungen des Läuterbottichs. Die als optimal ermittelten Stellgrößen werden dem Prozeß dann zugeführt. Man ist damit auch in der Lage, die Regelstrategie an die veränderlichen Parameter des Läuterprozesses anzupassen.

Bei der vereinfachten Ausführungsvariante gemäß Anspruch 2 wird das mathematische Modell nicht benötigt. Eine gezielte Änderung der Stellgrößen wird hierbei aus den bei den vorherigen Prozeßabschnitten und Suden derselben Biersorte gewonnenen Erfahrungen unter Verwendung eines neuronalen Netzes realisiert.

Die Berechnung der Stellgrößen für die Volumenströme der Ringleitungen des Läuterprozesses erfolgt mit dem Ziel, homogene Strömungs- und Konzentrationsverhältnisse zu erreichen, optional unter Einbeziehung von Konzentrationsmessungen in den Ringrohren.

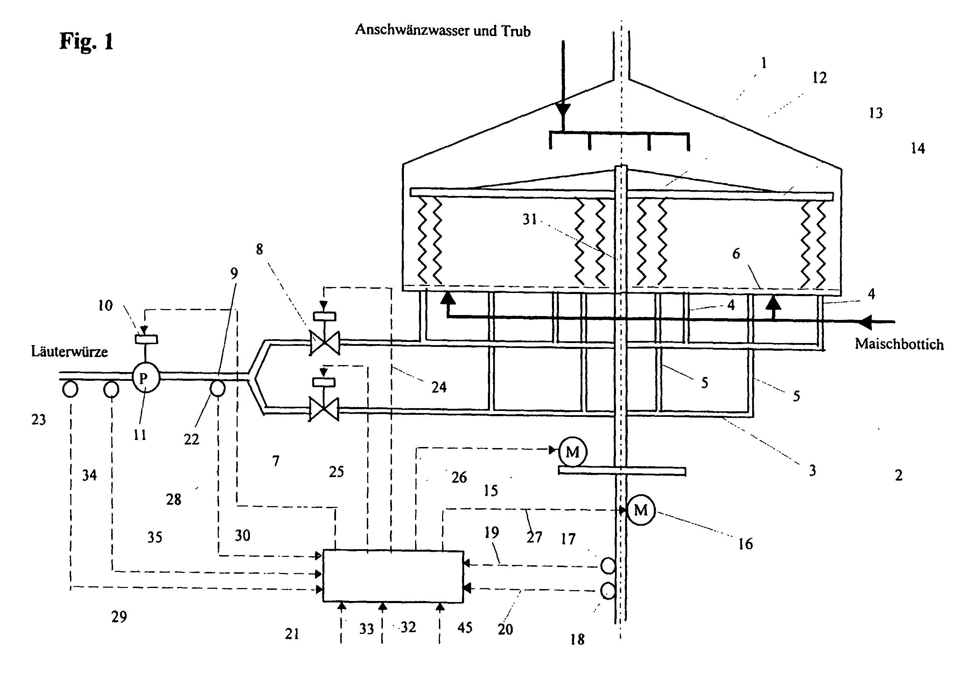

Die Erfindung wird im folgenden mit den in den Zeichnungen Fig. 1) und 2) dargestellten Ausführungsvarianten näher erläutert.

Die Vorrichtung umfaßt einen Läuterbottich 1, der auf einem nicht dargestellten Unterbau aufgestellt ist. Der Abfluß der Würze erfolgt über ein oder mehrere Ringrohrsysteme.

In der Ausführungsvariante sind zwei Ringrohrsysteme 2, 3 dargestellt, welche die Würze über Stichleitungen 4, 5 aus den Quellgebieten unter dem Senkboden 6 abziehen. Danach gelangt die Läuterwürze in die Sammelleitung 9.

In der Ausführungsvariante gemäß Fig. 1) wird der Volumenstrom der Läuterwürze über den Sensor 34 und die elektrische Verbindung 35 erfaßt. Dieser Volumenstrom der Läuterwürze wird durch Ausgabe einer Stellgröße geregelt. Diese wird über die Signalleitung 30 auf das Stellglied 10 auf die geregelte Pumpe 11 übertragen. Das Stellglied ist üblicherweise als Frequenzumformer ausgeführt. Die Teilvolumenströme in den einzelnen Ringrohren werden über Regelventile bzw. Regel-/Stellklappen 7,8 und die Steuerleitungen 24 und 25 beeinflußt.

Beim Abläuterprozeß bildet sich über dem Senkboden der Treberkuchen aus, welcher als Filterschicht für die abzuläuternde Würze dient.

Im Läuterbottich ist die Hackvorrichtung 12 angeordnet. Sie weist am oberen Ende mehrere Hackarme 13 auf, an denen jeweils mehrere Hackmesser 14 angeordnet sind. Diese Hackmesser dienen zum Auflockern der Treberschicht (Treberkuchen). Die Hackvorrichtung besitzt eine drehbare und axial verschiebbare Welle 31. Die Drehgeschwindigkeit wird i.a. über eine Stellgröße stufenlos geregelt, die über die Steuerleitung 26 auf das Stellglied, einen frequenzgeregelten Elektroantrieb 15, wirkt. Die Höhenlage der Hackmesser relativ zum Senkboden wird über eine weitere Stellgröße stufenlos geregelt. Die Stellgröße wirkt dazu über die Steuerleitung 27 auf das Stellglied 16. Das Stellglied wird durch einen Elektroantrieb oder eine Hydraulikeinheit zur Positionierung der Höhenlage realisiert.

Die Meßsignale von Höhenlage und Drehgeschwindigkeit der Hackvorrichtung werden von den Meßeinrichtungen 17 und 18 über die Meßleitungen 19 und 20 der Automatisierungsvorrichtung 21 zugeführt. Die Automatisierungsvorrichtung wird vorzugsweise als Mikrorechnersystem mit Speicherelementen und den zugehörigen peripheren Baugruppen zur Meßdatenerfassung und Ausgabe von Stellsignalen realisiert. Sie kann in ihrer Funktion auch in die bei der Läuterbottichautomatisierung und -visualisierung gebräuchlichen Automatisierungseinheiten, z.B. speicherprogrammierbaren Steuerungen, integriert sein.

In dieser Automatisierungsvorrichtung werden die Berechnungen am mathematischen Modell zur Simulation des aktuellen Prozeßverhaltens, die Ermittlung der optimalen Stelleingriffe in den Läuterprozeß im Sinne der Erfindung und ihre Ausgabe wie auch die Berechnungen zur Modellanpassung durchgeführt. In der Automatisierungsvorrichtung werden vor der erstmaligen Inbetriebnahme auch die für das Verfahren erforderlichen konstruktiven Daten des Läuterbottiches und die rezeptspezifischen Parameter eingegeben und abgespeichert. Zudem werden darin für die unterschiedlichen Biersorten und Malzqualitäten in jedem Verfahrensabschnitt die in der Vergangenheit ermittelten optimalen Parameter der ermittelten Regelstrategie gespeichert.

In der Sammelleitung 9 wird mittels einer Trübungsmeßeinrichtung 23 die Trübung der Läuterwürze in EBC erfaßt und über die Meßleitung 29 der Automatisierungsvorrichtung zugeführt. Zudem wird der Läuterdruck mit der Meßeinrichtung 22 und über die Meßleitung 28 zur Automatisierungsvorrichtung übertragen. Alternativ hierzu könnte auch der Treberwiderstand in Form des Differenzdruckes über der Treberschicht verwendet werden.

Weitere Eingangsgrößen des Läuterprozesses in die Automatisierungsvorrichtung sind Volumenstrom (Volumen pro Zeiteinheit) des Anschwänzwassers, Temperatur der Läuterwürze und des Anschwänzwassers. Als zusätzliche Eingangsgrößen können Menge bzw. Volumenstrom, Konzentration und Temperatur des während des Läuterprozesses zugeführten Trubes sowie die Konzentration bzw. der Leitwert der Läuterwürze in der Sammelleitung oder in den einzelnen Ringrohren verwendet werden. Die Konzentration des Trubes muß nicht gemessen werden, sondern kann als Prozeßparameter in die Automatisierungsvorrichtung eingegeben und dort verarbeitet werden. Diese Eingangsgrößen werden mit den zugehörigen Meßleitungen zusammenfassend mit den Zahlen 32 und 33 gekennzeichnet.

Weiterhin werden der Automatisierungsvorrichtung noch Status- bzw. Hilfssignale 45 zugeführt. Diese Informationen werden von den bei Läuterbottichen eingesetzten Einheiten zur Automatisierung eines rezepturspezifischen Verfahrensablaufes, z. B. durch eine speicherprogrammierbare Steuerung, bereitgestellt und enthalten z.B. Daten der aktuellen Rezeptur und Signale für den Beginn der einzelnen Verfahrensabschnitte.

Aus den Prozeßeingangsgrößen werden in der Automatisierungsvorrichtung mit Hilfe von selbstanpassenden mathematischen Modellen für den gesamten Prozeßablauf des Läutervorganges die Stellgrößen berechnet, die kontinuierlich oder in äquidistanten Zeitabschnitten über die Leitungen 24, 25 und 30 als Stellgrößen für die Regelung der Volumenströme an den Frequenzumformer 10 der Saugpumpe 11 und an die Durchflußregelventile/-klappen 7 und 8 weitergegeben werden. Über die Leitungen 26 und 27 werden ebenfalls kontinuierlich oder in äquidistanten Zeitabschnitten der elektrische Antrieb 15 zur Drehzahleinstellung und die elektrische oder hydraulische Einheit 16 zur Verstellung der Höhenlage der Hackvorrichtung angesteuert.

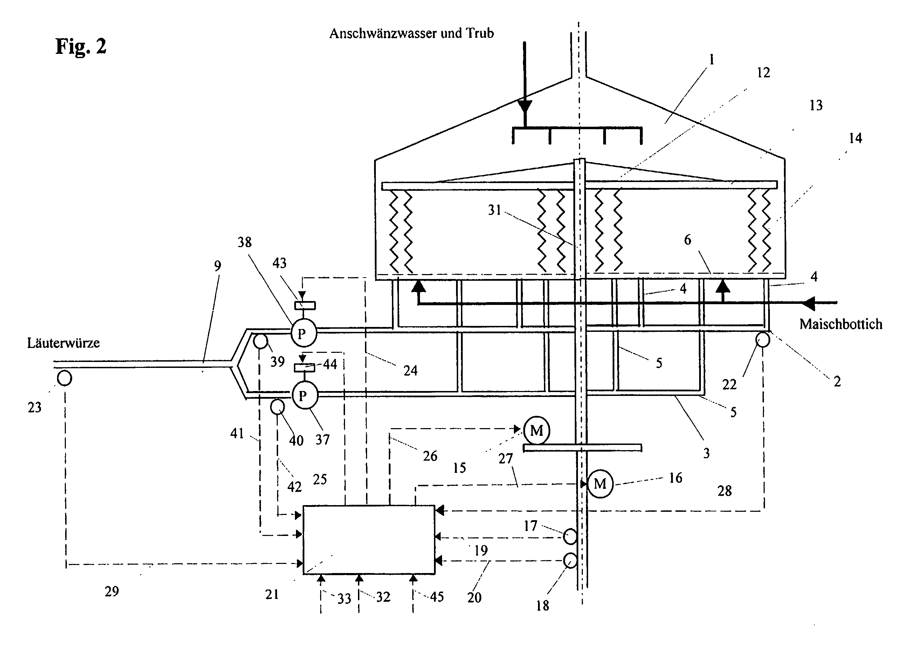

In der in Fig. 2 dargestellten zweiten Anordnungsvariante entfällt die geregelte Pumpe in der Sammelleitung. Hier werden in den Ringrohren mittels der Sensoren 39 und 40 die Teilvolumenströme gemessen und über die elektrischen Leitungen 41 und 42 der Automatisierungsvorrichtung zugeführt. Zur Beeinflussung der Volumenströme werden über die elektrischen Leitungen 24 und 25 die Frequenzumformer 43 und 44 der geregelten Pumpen 37 und 38 in den einzelnen Ringrohrsystemen 2 und 3 angesteuert.

Das Wirkungsprinzip der Automatisierungsvorrichtung wird im folgenden allgemein für die in Fig. 1 dargestellte Ausführungsvariante dargestellt. Ein Grundgedanke ist dabei die Verwendung eines mathematischen Modelles des Prozesses als Entscheidungsbasis für die Regelstrategie. Die Funktionen der Automatisierungsvorrichtung werden durch vier miteinander über Rechengrößen verbundene Funktionskomponenten realisiert:

a) Funktionskomponente: "Dynamisches Modell des Läuterprozesses"
b) Funktionskomponente: "Lernstrategie zur Modellanpassung"
c) Funktionskomponente: "Optimierungsstrategie zur Stellgrößenberechnung"
d) Funktionskomponente: "Stellgrößenaufteilung auf die Ringrohre"

Die vier Funktionskomponenten werden im folgenden dargestellt.

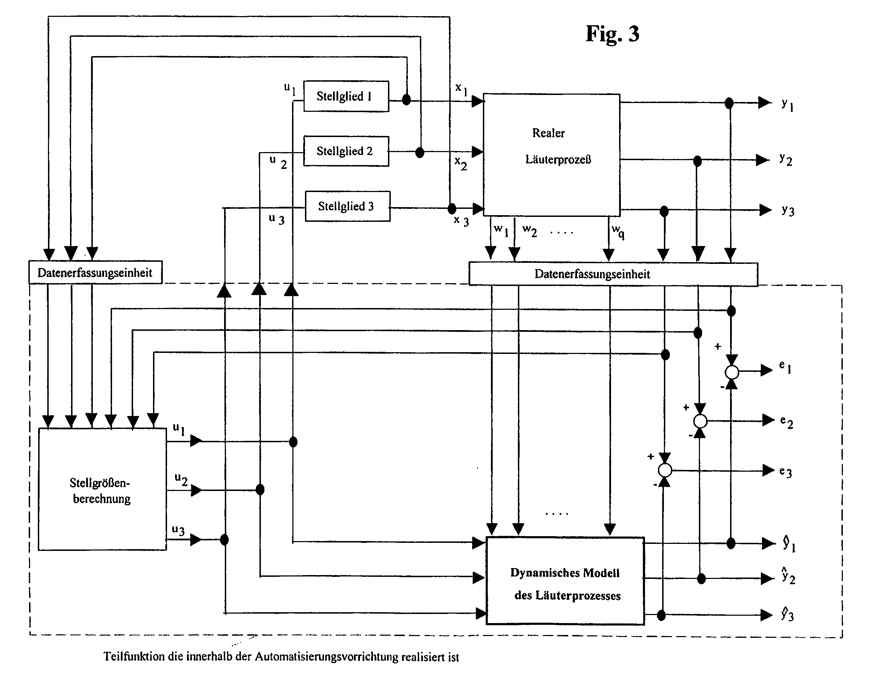

Die Einbindung der Funktionskomponente "Dynamisches Modell des Läuterprozesses" innerhalb des Signalflusses der Automatisierungseinheit wie auch die Schnittstelle der Automatisierungseinheit zum realen Läuterprozeß ist in Fig. 3 dargestellt.

Auf die Stellglieder 1 bis 3 des realen Läuterprozesses wirken die in der Funktionskomponente c) der Automatisierungs-

vorrichtung gebildeten elektrischen Stellgrößen $u_1$, $u_2$, und $u_3$. Diese Stellgrößen führen zu optimalen Werten der Regelgrößen $x_1$, $x_2$ und $x_3$ im Sinne der Ziele der Erfindung: minimale Läuterzeit, verbesserte Ausbeute und Produktqualität. In einer bevorzugten Realisierung werden folgende Stellgrößen und Regelgrößen verwendet:

$u_1$:     Stellgröße für den Volumenstrom der Läuterwürze

$u_2$:     Stellgröße für die Höhenlage der Hackvorrichtung

$u_3$:     Stellgröße für die Drehzahl der Hackvorrichtung

$x_1$:     Regelgröße für den Volumenstrom der Läuterwürze

$x_2$:     Regelgröße für die Höhenlage der Hackvorrichtung

$x_3$:     Regelgröße für die Drehzahl der Hackvorrichtung

Bei der Berechnung der optimalen elektrischen Stellgrößen $u_1$, $u_2$, und $u_3$ wird das dynamische und statische Verhalten der Stellglieder 1 bis 3 mitberücksichtigt.
Die Prozeßgrößen, die den Läuterprozeß hinsichtlich einer Verkürzung der Verfahrensdauer bestimmen und / oder den Prozeß in bezug auf die Ausbeute (Wirkungsgrad) sowie die Würzequalität (z.B. Trübung) festlegen, werden als meßbare Ausgangsgrößen $y_1$, $y_2$ und $y_3$ bezeichnet.
In einer bevorzugten Realisierung sind meßbare Ausgangsgrößen:

$y_1$:     Läuterdruck

$y_2$:     Trübung der Läuterwürze

$y_3$:     Konzentration der Läuterwürze

Durch die Regelgrößen $x_1$, $x_2$ und $x_3$ werden die meßbaren Ausgangsgrößen in optimaler Weise beeinflußt. Zur Berechnung der Stelleingriffe für einen optimalen Verfahrensablauf des Läuterprozesses werden zudem die zusätzlichen Meßgrößen $w_1$, $w_2$ bis $w_q$ erfaßt. Bei der dargestellten Ausführungsvariante werden folgende zusätzliche Meßgrößen verwendet:

$w_1$:     Volumenstrom des Anschwänzwassers

$w_2$:     Temperatur der Läuterwürze

$w_3$:     Temperatur des Anschwänzwassers

$w_4$:     Volumenstrom des Trubs

$w_5$:     Konzentration bzw. Leitwert des Trubs (kann auch als Konstante eingesetzt werden)

Die Regelgrößen $x_1$, $x_2$, $x_3$, die Ausgangsgrößen $y_1$, $y_2$, $y_3$ sowie die Meßgrößen $w_1$, $w_2$ bis $w_q$ werden über eine Datenerfassungseinheit (z.B. Analog/Digital-Umsetzer) der Automatisierungsvorrichtung zugeführt. Die Meßgrößen $w_1$, $w_2$ bis $w_q$ sowie die in der Funktionskomponente "Optimierungsstrategie für Stellgrößenberechnung" ermittelten elektrischen Stellgrößen $u_1$, $u_2$ und $u_3$ des Prozesses werden als Eingangsgrößen einem mathematischen Modell des Prozesses aufgeschaltet. Dieses Modell hat die Aufgabe, Schätzwerte der Prozeßausgangsgrößen zu ermitteln. Diese Schätzwerte der Ausgangsgrößen $y_1$, $y_2$ und $y_3$ werden im folgenden mit $\hat{y}_1$, $\hat{y}_2$ und $\hat{y}_3$ bezeichnet.
Das Modell ist das mathematische Abbild des realen Läuterprozesses. Es wird durch drei nichtlineare gekoppelte Differentialgleichungen beschrieben. Der Aufbau dieser Differentialgleichungen wird durch eine Struktur und dazugehörige Parameter festgelegt. Die Struktur beinhaltet die Anzahl der innerhalb jeder Differentialgleichung auftretenden Differentiale der Stell- bzw. Ausgangsgrößen und die Art der Verknüpfung durch mathematische Funktionen. Die Parameter dieser Differentialgleichung geben die Zahlenwerte, z.B. Koeffizienten, der Verknüpfung an. Die Struktur des mathematischen Modelles wurde festgelegt durch eine theoretische Analyse der physikalisch/technologischen Beziehungen beim Ablauf des Läuterprozesses und durch Auswertung von Messungen der verschiedenen Stell- und Meßgrößen für unterschiedliche Sude bei verschiedenen Läuterbottichen. Diese Auswertung ergab Informationen über die statischen und dynamischen Zusammenhänge zwischen den elektrischen Stellgrößen und den Ausgangsgrößen des Läuterprozesses. Zusätzlich werden innerhalb des Modelles die konstruktiven Daten des bei der Automatisierung betrachteten Läuterbottiches verwendet. Die Parameter dieses mathematischen Modelles können vor der erstmaligen Inbetriebnahme des Automatisierungsverfahrens durch Erfahrungswerte aus Anwendungen bei vergleichbaren Läuterbottichen abgeschätzt und initialisiert werden.

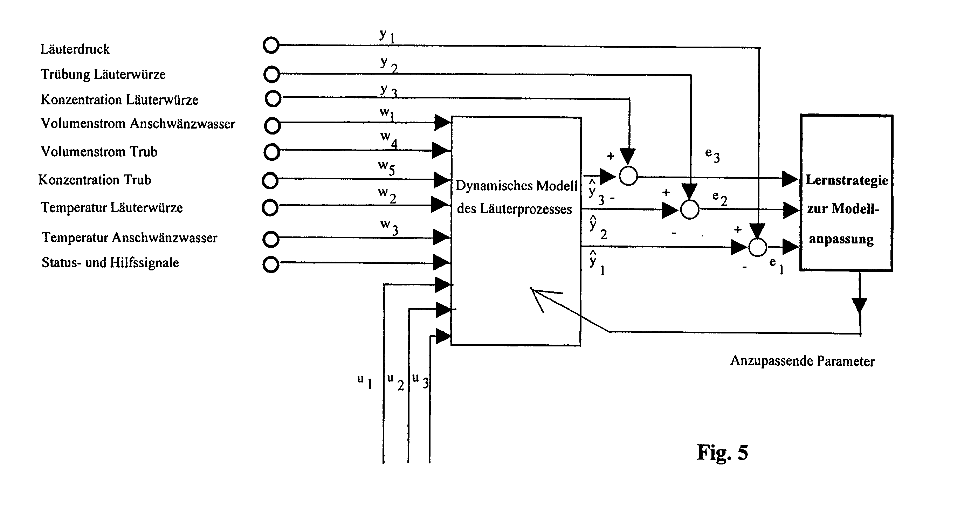

Da sich diese Parameter z.B. durch unterschiedliche Malzqualität von Sud zu Sud ändern, kann als Vorteil dieser Erfindung eine stetige Anpassung der Parameter durchgeführt werden. Diese Verfahrensweise führt zu einem selbstanpassenden Modell (Fig. 5). Diese Anpassung wird in der Funktionskomponente: "Lernstrategie für Modellanpassung" realisiert.

Eingangsgrößen des Modelles sind die Stellgrößen $u_1$, $u_2$ und $u_3$ und die Meßgrößen $w_1$, $w_2$ bis $w_q$ des Läuterprozesses. Durch dieses Modell werden die Schätzwerte $\hat{y}_1$, $\hat{y}_2$ und $\hat{y}_3$ der Ausgangsgrößen $y_1$, $y_2$ und $y_3$ des Läuterbottiches berechnet. Aus den dargestellten allgemeinen Prozeß- und Konstruktionskenntnissen kann der Zusammenhang zwischen den Modelleingangsgrößen und den Schätzwerten der Ausgangsgrößen durch den folgenden Satz (1) von nichtlinearen zeitvarianten Differentialgleichungen mit der Zeitvariablen t beschrieben werden:

Gl. (1)

$$\hat{y}_1(t) = f_1 \left\{ u_1(t), \frac{du_1(t)}{dt}, \frac{d^2u_1(t)}{dt^2}, \dots u_2(t), \frac{du_2(t)}{dt}, \frac{d^2u_2(t)}{dt^2}, \dots u_3(t), \frac{du_3(t)}{dt}, \frac{d^2u_3(t)}{dt^2}, \dots \right.$$
$$\left. w_1(t), \frac{dw_1(t)}{dt}, \frac{d^2w_1(t)}{dt^2}, \dots w_2(t), \frac{dw_2(t)}{dt}, \frac{d^2w_2(t)}{dt^2}, \dots w_q(t), \frac{dw_q(t)}{dt}, \frac{d^2w_q(t)}{dt^2}, \dots, \frac{d\hat{y}_1(t)}{dt}, \frac{d^2\hat{y}_1(t)}{dt^2} \dots \right\}$$

$$\hat{y}_2(t) = f_2 \left\{ u_1(t), \frac{du_1(t)}{dt}, \frac{d^2u_1(t)}{dt^2}, \dots u_2(t), \frac{du_2(t)}{dt}, \frac{d^2u_2(t)}{dt^2}, \dots u_3(t), \frac{du_3(t)}{dt}, \frac{d^2u_3(t)}{dt^2}, \dots \right.$$
$$\left. w_1(t), \frac{dw_1(t)}{dt}, \frac{d^2w_1(t)}{dt^2}, \dots w_2(t), \frac{dw_2(t)}{dt}, \frac{d^2w_2(t)}{dt^2}, \dots w_q(t), \frac{dw_q(t)}{dt}, \frac{d^2w_q(t)}{dt^2}, \dots, \frac{d\hat{y}_2(t)}{dt}, \frac{d^2\hat{y}_2(t)}{dt^2} \dots \right\}$$

$$\hat{y}_3(t) = f_3 \left\{ u_1(t), \frac{du_1(t)}{dt}, \frac{d^2u_1(t)}{dt^2}, \dots u_2(t), \frac{du_2(t)}{dt}, \frac{d^2u_2(t)}{dt^2}, \dots u_3(t), \frac{du_3(t)}{dt}, \frac{d^2u_3(t)}{dt^2}, \dots \right.$$
$$\left. w_1(t), \frac{dw_1(t)}{dt}, \frac{d^2w_1(t)}{dt^2}, \dots w_2(t), \frac{dw_2(t)}{dt}, \frac{d^2w_2(t)}{dt^2}, \dots w_q(t), \frac{dw_q(t)}{dt}, \frac{d^2w_q(t)}{dt^2}, \dots, \frac{d\hat{y}_3(t)}{dt}, \frac{d^2\hat{y}_3(t)}{dt^2} \dots \right\}$$

In diesen Gleichungen beschreiben die Ausdrücke $f_1\{\}$, $f_2\{\}$ und $f_3\{\}$ jeweils funktionale Abhängigkeiten.

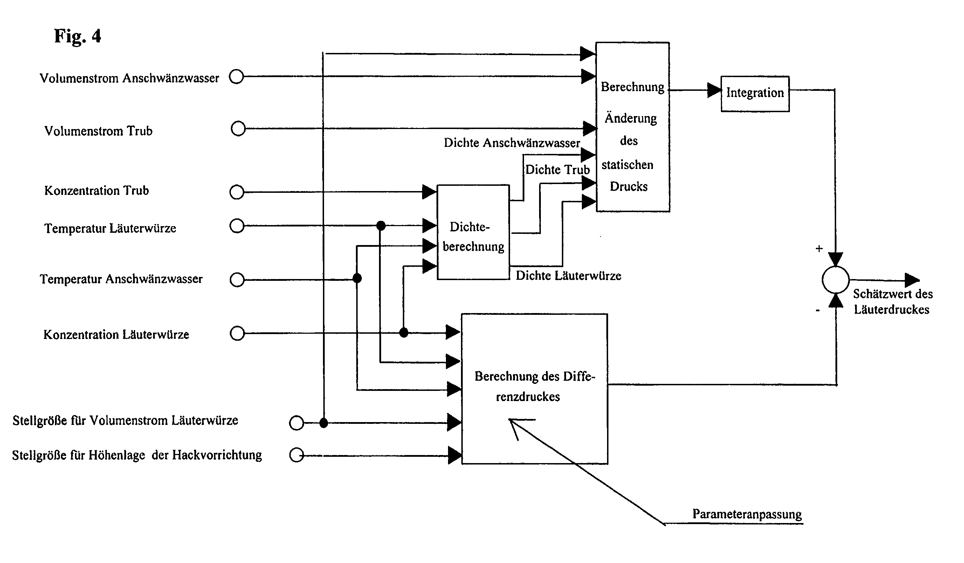

Am Beispiel des Schätzwertes $\hat{y}_1$ des Läuterdruckes $y_1$ für den Bereich der Vorderwürze soll der Aufbau der ersten Glg. von (1) erläutert werden. In Fig. 4 ist ein Teilmodell des nichtlinearen dynamischen Modelles dargestellt, das für die Schätzung des Läuterdruckes verwendet wird. Da sich der Läuterprozeß in den Prozeßabschnitten Vorderwürze und Nachguß strukturell ändert, wird der Prozeß in diesen Abschnitten auch durch nichtlineare Modelle mit unterschiedlicher Struktur beschrieben. Zudem ändern sich durch Unterschiede in der Qualität und Vorverarbeitung des Malzes die Parameter des Läuterprozesses. Diesem Sachverhalt muß auch durch eine Anpassung der Parameter des nichtlinearen Modelles begegnet werden. Die in den Teilfunktionen "Dichteberechnung" und "Berechnung der Änderung des statischen Drukkes" des Teilmodelles erforderlichen Parameter können vollständig aus den Daten der Eingangsgrößen im Zusammenwirken mit abgespeicherten Abbildungstabellen bestimmt werden und sind somit in jedem Zustand des Läuterprozesses bekannt. Um schwer zugängliche Parameter des nichtlinearen Modelles einfach anpassen zu können, wird ein Teil der nichtlinearen Differenzengleichungen in Form eines neuronalen Netzes realisiert. Dies gilt für die Parameter des Teilmodelles, das für die Berechnung des Differenzdruckes sorgt. Hierin sind insbesondere die Höhe und Porösität der Spelzenschicht nicht direkt durch Messungen oder einfache Abbildungen zugängliche Größen. Daher wird dieses Teilmodell durch eine neuronale Netzstruktur dargestellt, deren Parameter mittels der Funktionskomponente "Lernstrategie zur Modellanpassung" verändert werden. Der Aufbau von neuronalen Netzen für Anwendungen in der Regelungstechnik ist in der einschlägigen Literatur beschrieben, z.B. in Andreas Zell; Simulation Neuronaler Netze; Addison-Wesley Publishing Company.

Durch die Realisierung der Automatisierungsvorrichtung mittels eines Mikrorechnersystems werden die Stellgrößen lediglich zu den Zeitpunkten $t = k\, T_a$ berechnet und über periphere Baugruppen mit einer Haltefunktion dem Prozeß zugeführt. Hierbei ist $T_a$ eine auf die Dynamik des Prozesses abgestimmte Abtastzeit, z.B. 15 sec. Die Schätzwerte der Ausgangsgrößen werden daher mittels des mathematischen Modelles ebenfalls nur zu den Abtastzeitpunkten berechnet. Mit der normierten Zeit $k = t/T_a = 0, 1\ 2, 3, \ldots$ ergibt sich dann aus dem Gleichungssatz (1) der nachfolgende Satz (2) von nichtlinearen dynamischen Differenzengleichungen des mathematischen Modelles:

Gl. (2)

$$\hat{y}_1(k) = g_1\{u_1(k), u_1(k-1), u_1(k-2),\ldots u_2(k), u_2(k-1), u_2(k-2),\ldots u_3(k), u_3(k-1), u_3(k-2),\ldots$$
$$w_1(k), w_1(k-1), w_1(k-2),\ldots w_2(k), w_2(k-1), w_2(k-2),\ldots w_q(k), w_q(k-1), w_q(k-2),\ldots, \hat{y}_1(k-1), \hat{y}_1(k-2)\ldots\}$$

$$\hat{y}_2(k) = g_2\{u_1(k), u_1(k-1), u_1(k-2),\ldots u_2(k), u_2(k-1), u_2(k-2),\ldots u_3(k), u_3(k-1), u_3(k-2),\ldots$$
$$w_1(k), w_1(k-1), w_1(k-2),\ldots w_2(k), w_2(k-1), w_2(k-2),\ldots w_q(k), w_q(k-1), w_q(k-2),\ldots, \hat{y}_2(k-1), \hat{y}_2(k-2)\ldots\}$$

$$\hat{y}_3(k) = g_3\{u_1(k), u_1(k-1), u_1(k-2),\ldots u_2(k), u_2(k-1), u_2(k-2),\ldots u_3(k), u_3(k-1), u_3(k-2),\ldots$$
$$_1(k), w_1(k-1), w_1(k-2),\ldots w_2(k), w_2(k-1), w_2(k-2),\ldots w_q(k), w_q(k-1), w_q(k-2),\ldots, \hat{y}_3(k-1), \hat{y}_3(k-2)\ldots\}$$

Die Ausdrücke $g_1\{\}$, $g_2\{\}$ und $g_3\{\}$ charakterisieren in diesen Gleichungen jeweils funktionale Abhängigkeiten.

Das Zusammenwirken der Funktionskomponente "Lernstrategie zur Modellanpassung" mit der Funktionskomponente: "Dynamisches Modell des Läuterprozesses" wird in Fig. 5 dargestellt.

Das dynamische Modell des Läuterbottiches berechnet mit den aktuellen Werten der elektrischen Stellgrößen $u_1$, $u_2$, $u_3$, den zusätzlichen Meßgrößen $w_1$ bis $w_5$ und Status- bzw. Hilfssignalen die Schätzwerte $\hat{y}_1$, $\hat{y}_2$ und $\hat{y}_3$ der Ausgangsgrößen $y_1$, $y_2$ und $y_3$. Dies sind Schätzwerte zu äquidistanten Abtastzeitpunkten für den Läuterdruck, die Trübung und im Bereich des Nachgußes für die Konzentration. Beim Ablauf der Vorderwürze ist die Konzentration näherungsweise konstant. Diese Schätzwerte werden mit den zu den gleichen Zeitpunkten gemessenen Größen für Läuterdruck, Trübung und gegebenenfalls Konzentration verglichen. Die Differenzen ergeben die Fehlersignale $e_1$, $e_2$ und $e_3$, die ein Maß für die Güte des mathematischen Modelles darstellen. Ein ideal angepaßtes Modell ist gegeben, wenn die Schätzfehler $e_1$, $e_2$ bis $e_3$ in jedem Abtastzeitpunkt Null sind.

Diese Fehlersignale werden in der nachgeschalteten Funktionskomponente: "Lernstrategie zur Modellanpassung" verwendet. Es werden hierbei vorzugsweise Methoden eingesetzt, die eine i.a. skalare Gütefunktion optimieren. Die unbekannten Parameter in den Gleichungen (2) werden im folgenden mit $a_i$, $i = 1 \ldots N$, bezeichnet. Diese Parameter werden im Parametervektor

$$\mathbf{b} = \begin{bmatrix} a_1\ a_2 & \ldots & a_N \end{bmatrix}$$

zusammengefaßt.

Als Gütefunktion $I(T_1)$ zur Schätzung des Parametervektors $\mathbf{b}(T_1)$ zum Zeitpunkt $T_1$ wird z.B. die gewichtete Summe der Fehlerquadrate zu den aufeinanderfolgenden diskreten Abtastzeiten $k = t/T_a = 0, 1\ 2, 3, \ldots$ verwendet:

$$\text{Gl. (3)} \qquad I(T_1) = \sum_{-N_1}^{N_2}\left(c_1 e_1^2(k) + c_2 e_2^2(k) + c_3 e_3^2(k)\right)$$

Hierin wird durch die Summationsgrenzen $N_1$ und $N_2$ der Zeitbereich gekennzeichnet, in dem die geschätzten und gemessenen Ausgangsgrößen zur Anpassung der Parameter genutzt werden. Mittels den Konstanten $c_1$, $c_2$ und $c_3$ können unterschiedliche Gewichtungen für die Genauigkeit der Schätzung der unbekannten Parameter in Gl. (2) vorgegeben werden. Das Optimum der Schätzung, d.h. die besten Werte für den unbekannten Parametervektor $\mathbf{b}(T_1)$, wird bei einer minimalen Summe der Fehlerquadrate erreicht.

Das Funktionsprinzip dieses Lernalgorithmuses ist das iterative Verändern der anzupassenden Parameter. Ausgehend von dem zuvor zum Zeitpunkt $T_2$ geschätzten Parametervektor $\mathbf{b}(T_2)$, ergeben sich die neuesten Schätzwerte der zeitveränderlichen Parameter zum Zeitpunkt $T_1$ aus der iterativen Beziehung:

$$\text{Gl. (4)} \qquad \mathbf{b}(T_1) = \mathbf{b}(T_2) - r \frac{\partial I(T_1)}{\partial \mathbf{b}} \qquad r > 0$$

Hierin beschreibt r eine geeignet gewählte Schrittweite des Optimierungsalgorithmuses. Anstelle der Schätzgleichung (4) kann zur Ermittlung des Parametervektors $\mathbf{b}(T_1)$ auch die rekursive Schätzgleichung der Methode der kleinsten Fehlerquadrate verwendet werden. Die Anpassung des Parametervektors $\mathbf{b}$ kann nach jedem Abtastschritt durchgeführt werden. Sie kann allerdings auch nach vorher festgelegten größeren Zeitabschnitten oder selbsttätig bei Überschreiten einer Fehlergrenze aktiviert werden. Besonders vorteilhaft erweist es sich, die Parameter jeweils zu Beginn der Prozeßabschnitte Vorderwürze und Nachguß zu schätzen.

Das Verfahren kann sowohl offline als auch online eingesetzt werden. Es werden innerhalb des Modelles lediglich diejenigen Parameter angepaßt, die sich aufgrund unterschiedlicher Rohstoffzusammensetzungen ändern und nicht durch einfache Messungen zugänglich sind, z.B. die Höhe der Spelzenschicht oder die Viskosität der Läuterwürze.

Die Methode erlaubt durch Verwendung von Modellen mit unterschiedlicher Struktur und Parametrierung eine jeweils getrennte Behandlung der verschiedenen Prozeßabschnitte (Vorderwürze, Nachguß) und Verfahrensphasen (z.B. Läuterpause oder Tiefschnitt) des Läuterprozesses.

Als Startwerte der Modellparameter für den Läuterpozeß können z.B. verwendet werden:

- die Parameter eines früheren Läutervorganges der gleichen Biersorte des zu automatisieren den oder eines anderen Läuterbottiches
- die Parameter des Läutervorganges einer anderen Biersorte

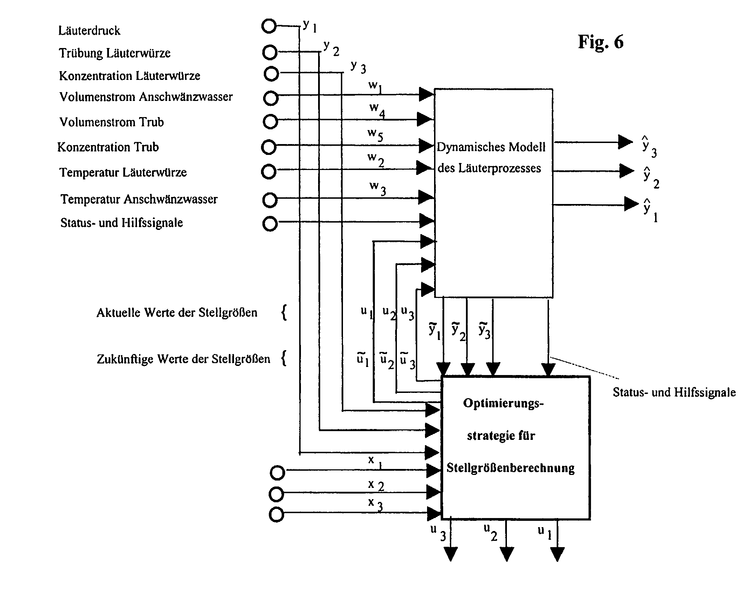

Das nichtlineare zeitveränderliche dynamische Modell des Läuterprozesses dient als Grundlage für die nachfolgende Bearbeitung in der Funktionskomponente: "Optimierungsstrategie zur Stellgrößenberechnung". Das Zusammenwirken dieser Funktionskomponente mit der Funktionskomponente: "Mathematisches Modell des Läuterprozesses" veranschaulicht Fig. 6. Eingangsgrößen dieses Modelles sind zunächst die aktuellen Werte von

$x_1$: Regelgröße für Volumenstrom der Läuterwürze
$x_2$: Regelgröße für Höhenlage der Hackvorrichtung
$x_3$: Regelgröße für Drehzahl der Hackvorrichtung

und der meßbaren Ausgangsgrößen:

$y_1$: Läuterdruck
$y_2$: Trübung der Läuterwürze
$y_3$: Konzentration bzw. Leitwert der Läuterwürze

Von diesen Größen sind auch die Werte aus der nahen Vergangenheit abgespeichert. Zusätzlich werden Status- und Hilfssignale übergeben, die den aktuellen Prozeßabschnitt bzw. die aktuelle Verfahrensphase definieren.

Zum Zwecke der Optimierung der elektrischen Stellgrößen des Läuterprozesses wird zunächst ein Optimierungskriterium J definiert, in welchem die für den Läuterprozeß relevanten Faktoren, z.B. Läuterzeit, Ausbeute, Würzetrübung, berücksichtigt werden können. Additiv oder alternativ können auch wichtige Prozeßgrößen oder Abweichungen von kritischen Prozeßzuständen im Gütekriterium bewertet werden, z.B. die Abweichung des Läuterdruckes von einem definierten Grenzwert, um einen Tiefschnitt durch die Hackvorrichtung zu vermeiden. Dieses Kriterium J kann in allgemeiner Form durch die Gl. (5):

$$\text{Gl. (5)} \qquad J = \sum_{j=1}^{M} d_j \, f_j^2(k)$$

beschrieben werden. Ein optimaler Prozeßverlauf ist gegeben, wenn das Optimierungskriterium ein Minimum annimmt. Die M Summanden $f_j$ in Gl. (5) beschreiben die zuvor dargestellten wünschenswerten Merkmale für einen optimalen Betrieb des Läuterprozesses. Die Gewichtungsfaktoren $d_j$ innerhalb der Optimierungsstrategie können in der Brauerei, unter Berücksichtigung der Bedingung $d_j \geq 0$, eingestellt und auch während des Prozeßablaufes verändert werden. Damit wird eine individuelle Anpassung des Läuterprozeßablaufes an die betriebs- und produktionsspezifischen Anforderungen der Brauerei ermöglicht. Die Gewichtungfaktoren dj für die Optimierung können in den verschiedenen Abschnitten des Läuterprozesses unterschiedlich sein.

Durch die Verwendung des dynamischen Modelles des Läuterprozesses können die Auswirkungen einer Stellgrößenänderung zu jedem Aktionszeitpunkt $T_i$, i = 1, 2, ...auf die modellierten Prozeßgrößen zu einem zukünftigen Zeitpunkt $T_i + \Delta t$ vorausschauend durch Prädiktion berechnet und damit auch der geplante Stellgrößeneinfluß auf das Gütekriterium bewertet werden. Die Prädiktionszeit $\Delta t$ kann sich über den Zeitraum eines Prozeßabschnitte (Vorderwürze, Nachguß), den Zeitraum einer Verfahrensphase (z.B. Läuterpause oder Tiefschnitt) oder auch über einen Teil dieser Zeitspannen erstrecken. Die Aktionszeitpunkte $T_i$ können beliebig gewählt werden. Als vorteilhaft erweist es sich, diese Zeitpunkte aus dem dynamischen Verlauf von hierfür ausgewählten einzelnen Ausgangsgrößen zu bestimmen. Es kann jedoch auch der zeitliche Verlauf von mehreren Ausgangs- bzw. Prozeßgrößen hierfür genutzt werden. Ein Aktionszeitpunkt kann z.B. gegeben sein, wenn eine Ausgangsgröße, z.B. der Läuterdruck, gewisse vorgebbare Grenzwerte erreicht oder wenn die zeitliche Ableitung (Gradient) der Ausgangsgröße bestimmte vorgebbare Schranken überschreitet.

Zur Optimierung wird zunächst eine gezielte Änderung der Stellgrößen mittels eines neuronalen Netzes vorgenommen, bei der auch die Erfahrungen von vorherigen Suden des gleichen Biertypes berücksichtigt werden. Diese Stellgrößenänderungen werden bis zum nächsten Aktionszeitpunkt als konstant angenommen. Sie können jedoch auch bis zum nächsten Aktionszeitpunkt mit konstanter Steigung anwachsen bzw. abfallen. Diese geplanten zukünftigen Stellgrößen werden mit $\tilde{u}_1$, $\tilde{u}_2$ und $\tilde{u}_3$ bezeichnet.

Sie werden der Funktionskomponente: "Dynamisches Modell des Läuterprozesses" übergeben. Vorzugsweise werden Stellgrößen verwendet, die bis zum nächsten Aktionszeitpunkt konstant sind oder mit konstanter Steigung anwachsen bzw. abfallen.

Mittels des Modelles werden für die zukünftigen Stellgrößen jeweils die Zeitverläufe der Prozeßausgangsgrößen für die Prädiktionszeit $\Delta t$ mit dem Gleichungssatz (2) vorausberechnet. Die daraus entstehenden Größen sind:

$\tilde{y}_1$: Prognostizierter(zukünftiger) Signalverlauf für den Läuterdruck

$\tilde{y}_2$: Prognostizierter(zukünftiger) Signal verlauf für die Trübung der Läuterwürze

$\tilde{y}_3$: Prognostizierter (zukünftiger) Signalverlauf für die Konzentration der Läuterwürze.

Diese Vorgehensweise einer vorausschauenden Berechnung ist insbesondere durch das dynamische Verhalten des Läuterprozesses begründet, da eine aktuelle Stellgröße sich auch auf zukünftige Prozeßgrößen auswirkt. Das dynamische Modell übergibt nach der Modellrechnung der Funktionskomponente "Optimierungsstrategie für Stellgrößenberechnung" die prognostizierten Signalverläufe.

Diese Größen beeinflussen in der erfindungsgemäßen Realisierung der Regelstrategie die gemäß Gl.(5) eingeführten Merkmale $f_j$ des Läuterprozesses. Damit können die Auswirkungen der gezielten Änderung der Stellgrößen auf das Gütekriterium mit Gl. (5) berechnet werden. Der auf diese Weise berechnete Wert des Gütekriteriums stellt eine Prognose für die zu erwartende Güte des Läuterprozesses dar. Sofern der prognostizierte Funktionswert des Gütekriteriums nicht gewissen vorgebbaren Genauigkeitsanforderungen entspricht, wird mittels des neuronalen Netzes ein erneuter Stellgrößenvorschlag der Funktionskomponente: "Dynamisches Modell des Läuterprozesses" übergeben und die zuvor dargestellten Teilaufgaben werden iterativ wiederholt. Da neuronale Netze selbstlernende Eigenschaften besitzen, werden nur sehr wenige Iterationen benötigt, bis sich im Sinne der gewählten Genauigkeitsanforderung befriedigende Ergebnisse einstellen. Insbesondere kann bereits bei der ersten Iteration ein günstiger Stellgrößenvorschlag unterbreitet werden, da das neuronale Netz seine Entscheidungen auch auf den Erfahrungen bei den vorangehenden Suden aufbaut.

Damit können zu jedem Zeitpunkt die bezüglich des Optimierungskriteriums für den Gesamtprozeß optimalen Stellgrößen für den Volumenstrom $u_1$ der Läuterwürze, die Höhenlage $u_2$ der Hackvorrichtung und die Drehzahl $u_3$ der Hackvorrichtung ermittelt werden. Nach Ablauf der Prädiktionszeit $\Delta t$ wird das Optimierungskriterium mit den aufgetretenen realen Prozeßdaten erneut berechnet und mit dem zuvor prognostizierten Funktionswert des Gütekriteriums verglichen. Eine dann auftretende Differenz wird genutzt, um den neuronalen Regler in Richtung einer verbesserten Stellgrößenvorgabe bei der nächsten Entscheidungsfindung zu trainieren. Mit den Stellgrößen $u_2$ und $u_3$ können direkt die Stellglieder des Hackwerkes angesteuert werden, während die Stellgröße $u_1$ noch auf die Ringleitungen aufgeteilt werden muß.

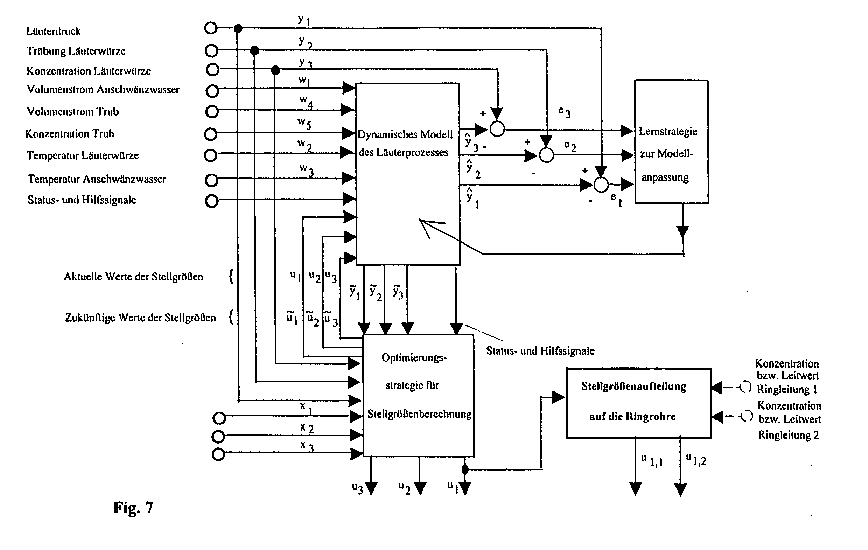

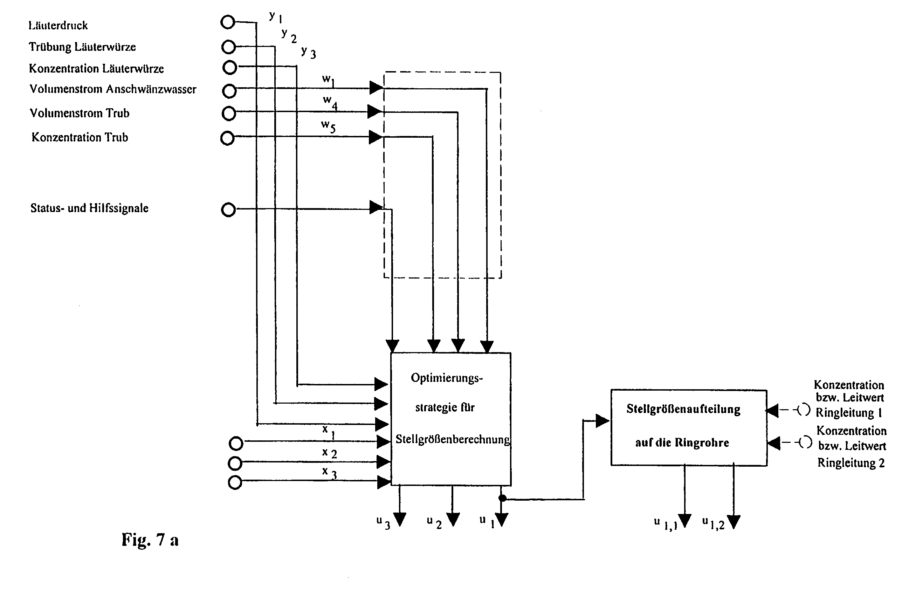

Aus der elektrischen Stellgröße $u_1$ für den Volumenstrom werden in der Funktionskomponente: " Stellgrößenaufteilung auf die Ringrohre" die elektrischen Stellgrößen $u_{1,1}$ und $u_{1,2}$ für die Volumenströme in den Ringleitungen 1 und 2 berechnet. Die Einbindung dieser Funktionkomponente in die Umgebung der zuvor vorgestellten Funktionskomponenten wird in Fig. 7 verdeutlicht.

Grundlage für die Stellgrößenaufteilung auf die Ringrohre ist die Forderung nach homogenen Strömungsverhältnissen innerhalb des Treberkuchens; d.h. die elektrische Stellgröße $u_{1,i}$ der i-ten Ringleitung führt zu einem Volumenstrom $x_{1,i}$ der Läuterwürze in dieser Leitung, so daß in erster Näherung gilt:

$$\text{Gl. (6)} \qquad x_{1,i} = x_1 \, \frac{A_i}{A} \qquad\qquad i = 1 \text{ bzw. } 2$$

$x_1$: Volumenstrom der Läuterwürze
$A_i$: Einzugsgebiet (Quellgebiet) der i-ten Ringleitung
$A$: Gesamteinzugsgebiet (Bottichbodenfläche) aller Ringleitungen

Es wird vereinfachend ein proportionaler Zusammenhang zwischen den elektrischen Stellgrößen $u_{1,i}$ und den Volumenströmen in den Ringleitungen $x_{1,i}$ angenommen, die Proportionalitätskonstante sei $k_i$. Dann folgt aus Gl. (6) für die erforderliche Stellgröße $u_{1,i}$:

$$\text{Gl. (7)} \qquad u_{1,i} = x_1 \, k_i \, \frac{A_i}{A} \qquad\qquad i = 1 \text{ bzw. } 2$$

Durch zusätzliche, in Fig. 1 nicht dargestellte Messungen der Konzentration bzw. des Leitwertes in den einzelnen Ringleitungen können die einzelnen elektrischen Stellgrößen $u_{1,i}$ derart ausgegeben werden, daß sowohl die Summe der Teilvolumenströme dem geforderten Gesamtvolumenstrom entspricht als auch eine homogene Konzentrationsverteilung über die einzelnen Ringleitungen gegeben ist. Die Konzentrations- bzw. Leitwertmessung kann auch auf einen bestimmten Zeitabschnitt - z.B. während der Inbetriebnahme des Läuterbottiches - beschränkt werden.

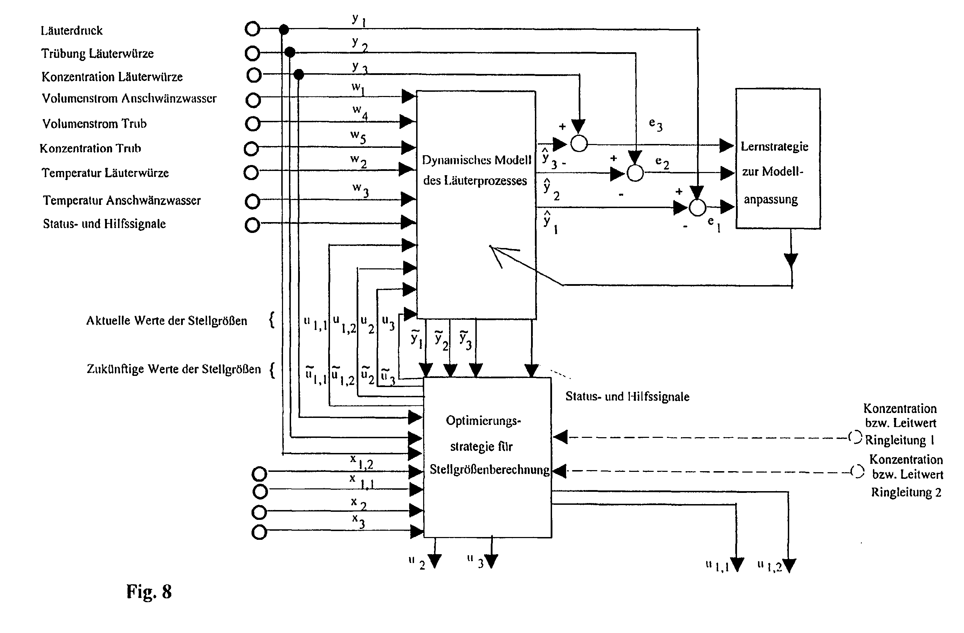

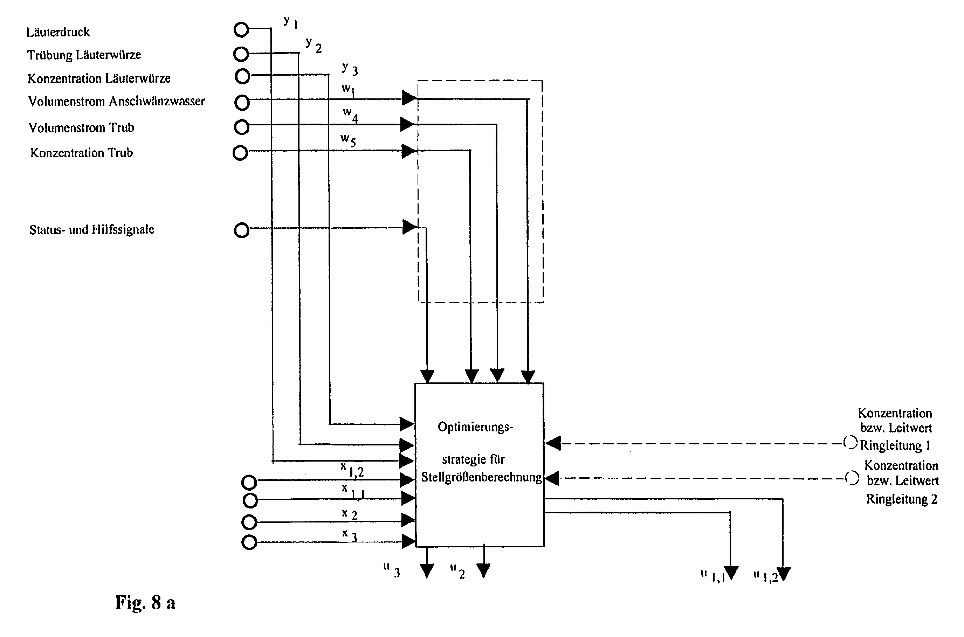

Für die in Fig. 2 dargestellte Ausführungsvariante zur Regelung des Würzeabflusses wird die Struktur der Automatisierungsvorrichtung in Fig. 8 abgebildet. Die Vorgehensweise hierbei entspricht grundsätzlich dem zuvor in Bezug auf den Läuterbottich gemäß Fig 1 beschriebenen Ablauf mit folgenden Unterschieden: Anstelle des Gesamtvolumenstromes $x_1$ der Läuterwürze werden hier die gemessenen Teilvolumenströmen $x_{1,1}$ und $x_{1,2}$ der Würze in den beiden Ringleitungen verwendet. Zudem werden anstelle der Stellgröße $u_1$ für den Volumenstrom der Läuterwürze die Stellgrößen $u_{1,1}$ und $u_{1,2}$ für die Volumenströme in den Ringleitungen zur Berechnung der Prognosewerte mittels des dynamischen Modelles des Läuterprozesses genutzt. Das hierfür genutzte Modell muß dabei auch die Gleichungen für die Stellglieder der Ringrohrleitungen umfassen. Durch eine Messung der Konzentrationen in den einzelnen Ringleitungen können auch hier Stellgrößen ausgegeben werden, die eine homogene Konzentrationsverteilung in den Ringrohren sicherstellen.

In einer weiteren Variante für die Anordnung gemäß Bild 2 kann auch aus den Volumenströmen $x_{1,1}$ bzw. $x_{1,2}$ der Ringleitung 1 und 2 ein fiktiver Gesamtvolumenstrom $x_1$ gebildet werden. Mittels dieser Größe wird dann eine fiktive Gesamtstellgröße $u_1$ in der Funktionkomponente "Optimierungsstrategie" gebildet, die dann unter Beachtung der Gl. (7) für die Berechnung der Einzelstellgrößen $u_{1,1}$ und $u_{1,2}$ der Ringleitungen verwendet wird.

In einer vereinfachten Ausführungsvariante (Anspruch 4) kann die Funktionskomponente "Lernstrategie zur Modellanpassung" vollständig entfallen. Auf eine vorausschauende Berechnung zur Beurteilung der Wirkung einer Stellgröße auf die Ausgangsgrößen wird verzichtet. Damit wird in der Funktionskomponente "Dynamisches Modell des Läuterprozesses" keine Modellberechnung erforderlich. Die dynamischen Gleichungen zur Beschreibung des Prozeßverhaltens können somit entfallen. Für die Anordnungsvariante gemäß Fig. 1 ist dann die Automatisierungsstruktur in Fig. 7a und für die Anordnungsvariante nach Fig. 2 ist die Automatisierungsstruktur in Fig. 8a dargestellt. Tritt ein Aktionszeitpunkt $T_i$ ein, so werden neue Stellgrößen ermittelt. Vorzugsweise werden hierbei Stellgrößen verwendet, die bis zum nächsten Aktionszeitpunkt konstant sind oder mit konstanter Steigung anwachsen bzw. abfallen. Diese Stellgrößenberechnung erfolgt durch eine neuronale Netzstruktur im Block "Optimierungsstrategie für Stellgrößenberechnung". Im Unterschied zu den zuvor dargestellten Ausführungsvarianten erfolgt nun keine Überprüfung dieser Stellgrößen durch ein dynamisches Modell. Statt dessen werden die Stellgrößen direkt an den Läuterbottich ausgegeben. Beim nächsten Aktionszeitpunkt werden die Wichtungen eines neuronalen Netzes durch ein festgelegtes Gütekriterium mit Hilfe eines Lernalgorithmuses optimiert. Dies geschieht durch Berechnung des Optimierungskriteriums zu diesem Zeitpunkt und Vergleich dieses Ergebnisses mit dem Ergebnissen aus vorherigen Suden, die gegebenenfalls mit anderen Stellgrössenwerten durchgeführt wurden. Diese Änderungen der Wichtungen haben zum Ziel, daß beim nächsten Abläutervorgang auf die Erfahrung dieses Sudes zurückgegriffen werden kann und ein im Sinne der Erfindung verbessertes Abläuterverhalten realisiert werden kann. Die im Block "Optimierungsstrategie für Stellgrößenberechnung" erfaßten Regelgrößen $x_1$ für den Volumenstrom der Läuterwürze, $x_2$ für die Höhenlage der Hackvorrichtung und $x_3$ für die Drehzahl der Hackvorrichtung werden in dieser Variante gemäß Fig. 7a nur genutzt, um die Funktion der Stell- bzw. Regelelemente für diese physikalischen Größen zu überwachen. Das gleiche gilt für die Volumenströme $x_{1,1}$, bzw $x_{1,2}$ der Ringleitungen gemäß der in Fig. 8a dargestellten Variante. Die gemessenen Ausgangsgrößen Läuterdruck $y_1$, Trübung $y_2$ der Läuterwürze und Konzentration $y_3$ der Läuterwürze können bei diesen vereinfachten Varianten einerseits als Parameter innerhalb des Gütekriteriums genutzt werden. Andererseits können aus diesen Meßgrößen bzw. ihren zeitlichen Ableitungen auch die Aktionszeitpunkte abgeleitet werden. Die zugeführten Status- und Hilfssignale dienen zur Übermittlung des momentanen Prozeßabschnittes und der aktuellen Verfahrensphase. Bei Änderungen innerhalb dieser Bereiche wird jeweils auf ein Programm mit anderen Wichtungen umgeschaltet, die sich in der Vergangenheit als optimal im Sinne des gewählten Kriteriums erwiesen haben. Die zudem im Block "Optimierungsstrategie für Stellgrößenberechnung" aufgeschalteten Meßgrößen: Volumenstrom $w_1$ des Anschwänzwassers, Volumenstrom $w_2$ des Trubes und Konzentration $w_4$ des Trubes können ebenfalls als Parameter innerhalb des gewählten Gütekriteriums genutzt werden.

Eine einfache Regelvariante im Sinne der vorliegenden Erfindung wird im folgenden Beispiel detaillierter erläutert. Hierzu wird der Ablauf für die Prozeßabschnitte Vorderwürze und Nachguß getrennt betrachtet. Ziele der Regelung des Läuterprozesses bei diesem Beispiel sind primär eine minimale Zeitdauer und sekundär die Einhaltung eines Mindestläuterdruckes während der einzelnen Prozeßabschnitte. Diese Vorgaben werden in einem, dem Optimierungskriterium gemäß Gl. (5) ähnlichen, Optimierungskriterium gemäß Gl. (8) mit geeigneten Koeffizienten $d_1$, $d_2$, $d_3$ und $d_4$ bewertet:

$$\text{Gl. (8)} \qquad J = \sum_{j=1}^{4} d_j \; f_j^2(k)$$

$f_1$: Zeitdauer der Vorderwürze
$f_2$: Zeitdauer des Nachgusses
$f_3 = y_1, vw - y_1 ,GVW$
mit

$y_{1,VW}$:     Läuterdruck am Ende der Vorderwürze
$y_{1,GVW}$:   Grenzwert für Läuterdruck am Ende der Vorderwürze

$f_4 = y_{1,NG} - y_{1,GNG}$
mit

$y_{1,NG}$:     Läuterdruck am Ende des Nachgusses
$y_{1,GNG}$:   Grenzwert für Läuterdruck am Ende des Nachgusses

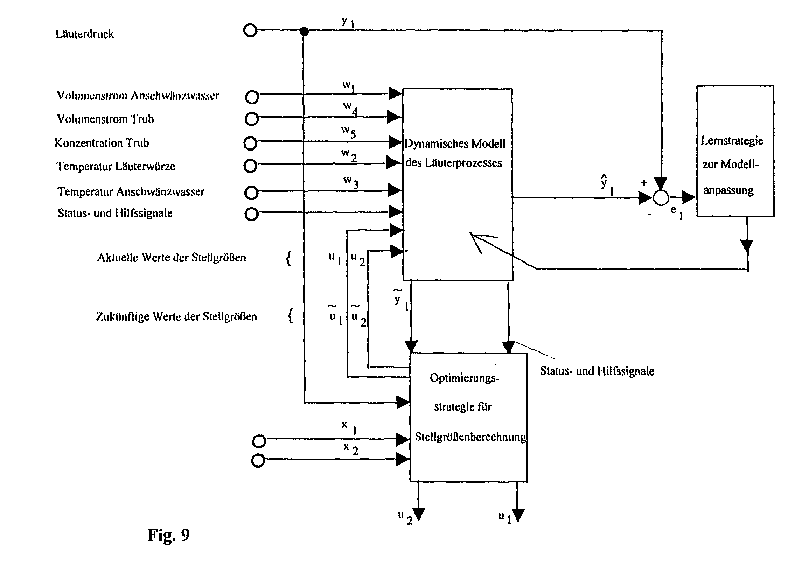

Für die Optimierung im Bereich der Vorderwürze gilt $d_2 = 0$ und $d_4 = 0$. Im Bereich des Nachgusses ist $d_1 = 0$ und $d_3 = 0$. Das Ziel, die Minimierung dieses Optimierungskriteriums, soll bei diesem vereinfachten Beispiel lediglich durch die Stellgröße $u_1$ für den Volumenstrom der Läuterwürze und die Stellgröße $u_2$ für die Höhenlage der Hackvorrichtung erreicht werden. Die Struktur der vereinfachten Automatisierungsvorrichtung ist in Fig. 9 dargestellt.

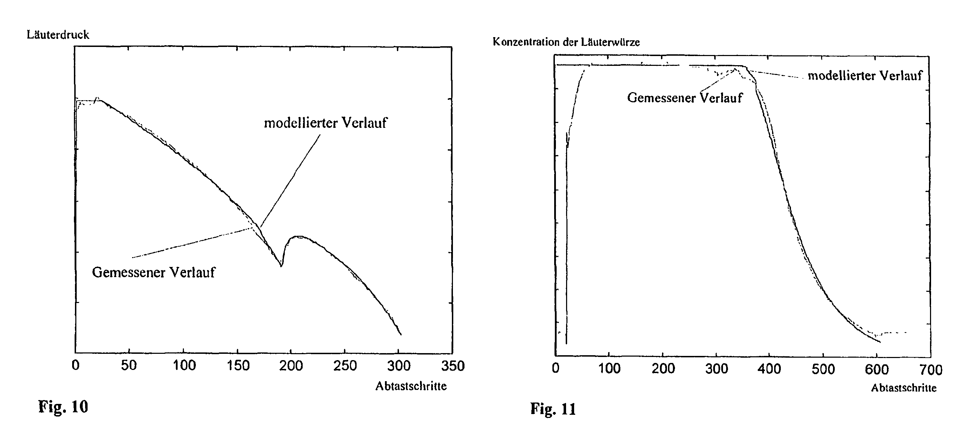

Bei dieser einfachen Regelvariante berücksichtigt das dynamische Modell des Läuterprozesses lediglich eine Schätzung des Läuterdruckes. Durch Bildung der Differenz zwischen dem Schätzwert des Läuterdruckes und dem gemessenen Läuterdruck können entweder fortlaufend oder zu bestimmten Zeitabschnitten, z.B. am Ende des Prozeßabschnittes, die Parameter einer Teilstruktur des nichtlinearen dynamischen Modelles mittels einer Lemstrategie angepaßt werden. Die Güte des resultierenden Modelles für den Prozeßabschnitt Vorderwürze wird in Fig. 10 verdeutlicht, in der der gemessene Verlauf und der modellierte Verlauf des Saugdrukkes dargestellt ist. In Fig. 11 ist der gemessene und modellierte Verlauf der Konzentration der Läuterwürze während der Prozeßabschnitte Vorderwürze und Nachguß dargestellt. Bei dem gemäß Gl. (8) gewählten Optimierungskriterium wird die Konzentration allerdings nicht berücksichtigt.

Auf der Basis dieses Modelles werden die Berechnungen zur Ermittlung der besten Stellgrößen im Sinne des Optimierungskriteriums für den Volumenstrom $u_1$ der Läuterwürze und für die Höhenlage $u_2$ der Hackvorrichtung durchgeführt.

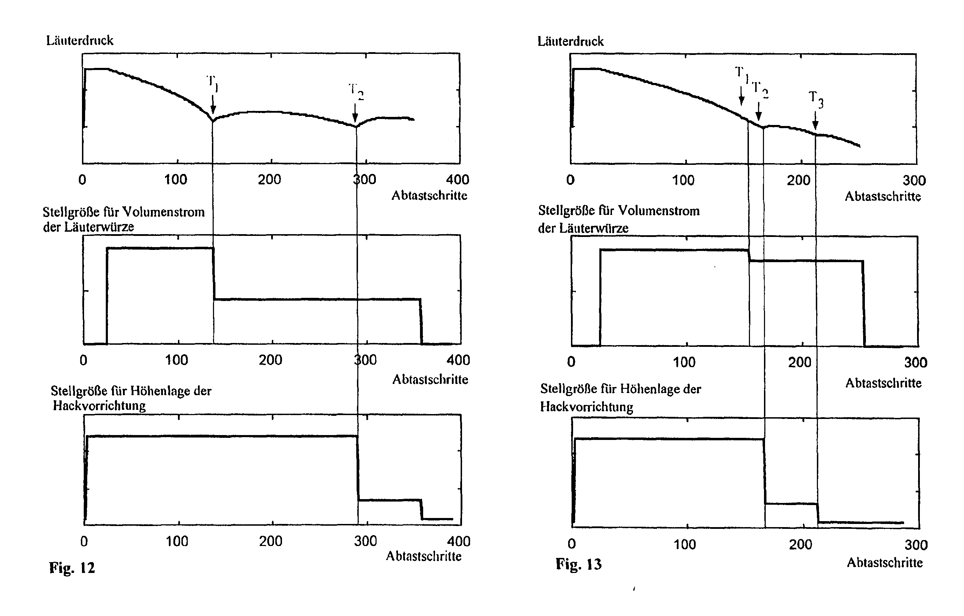

In Fig. 12 und 13 sind zwei Zeitdiagramme des Ablaufes für den Prozeßabschnitt Vorderwürze dargestellt.

Als Startwerte für die Stellgrößen werden zunächst Werte ausgegeben, die entsprechend der Bottichauslegung und Würzequalität (z.B. Trübung) zu einem maximalen Volumenstrom und einer günstigeren Höhenlage der Hackvorrichtung führen. Ab Beginn der Vorderwürze bis zum ersten Aktionszeitpunkt werden die Parameter des Modelles für die Vorderwürze an den aktuellen Sud adaptiert.

An den Aktionszeitpunkten $T_i$ wird berechnet, welche Änderungen der Stellgrößen erforderlich werden, um die o.a. Regelungsziele einzuhalten und das Optimierungskriterium zu minimieren. Diese Berechnungen erfolgen mithilfe von Prädiktionen des Läuterdruckverlaufes. Zunächst wird unter Beibehaltung des aktuellen Volumenstromes die Restdauer für die Vorterwürze berechnet. Damit erhält man den Prognosewert für die Zeitdauer der Vorderwürze. Der Läuterdruckverlauf wird, ausgehend vom gemessenen aktuellen Läuterdruck, für diese Restdauer vorausprognostiziert. Überschreitet diese Schätzung des Läuterdruckes zu irgend einem Zeitpunkt in der Vorderwürze den für das Ende der Vorderwürze vorgegebenen Grenzwert $y_{1,GVW}$, so ist die aktuelle Stellgröße für den Volumenstrom zu reduzieren bzw. das Hackwerk abzusenken, um einen Tiefschnitt und die damit verbundene Läuterpause (Anhalten des Würzeabzugs) zu vermeiden. Verbleibt hingegen der prognostizierte Läuterdruckverlauf im Zeitintervall stets im zulässigen Druckbereich, so könnte sogar eine erhöhte Stellgröße $u_1$ ausgegeben werden, die zu einem vergrößerten Volumenstrom führt. Mit dem Prognosewert für die Zeitdauer der Vorderwürze und der Prognose des Läuterdruckes am Ende der Vorderwürze kann jeweils das Optimierungskriterium entsprechend Gl. (8) berechnet werden.

In dem in Fig. 12 dargestellten zeitlichen Ablauf werden die Aktionszeitpunkte $T_1$ und $T_2$ von der zeitlichen Ableitung des Läuterdruckes bestimmt. Zum Zeitpunkt $T_1$ wird erkannt, daß bei Beibehaltung der aktuellen (großen) Stellgröße für den Volumenstrom der Läuterwürze der Grenzwert des Läuterdruckes unterschritten würde. Deshalb wird die Stellgröße reduziert. Die Größe der Änderung wird mittels eines iterativen Verfahrens berechnet, das auf die Dynamik der Prozeßgrößen des aktuellen Sudes und auf die Erfahrungen (Trainingsdaten) von vorhergehenden Suden derselben Biersorte zurückgreift. Sie ergibt sich aus dem Ziel, das Optimierungskriterium zu minimieren. Zum Aktionszeitpunkt $T_2$ wird durch Prognose erkannt, daß bei Beibehaltung der bisherigen Stellgrößen der Läuterdruck am Ende der Vorderwürze den vorgegebenen Grenzwert unterschreiten würde. Durch Berechnungen am Modell ermittelt das Automatisierungssystem, daß dies allein durch Absenken der Hackvorrichtung - bei Beibehaltung der Stellgröße des Volumenstromes - vermieden werden kann. Der Betrag der Veränderung der Höhenlage wird wiederum durch die Funktionskomponente "Optimierungsstrategie für Stellgrößenberechnung" berechnet.

Zudem wird an jedem Entscheidungspunkt stets überprüft, ob bei Inkaufnahme eines Tiefschnittes oder einer Läuterpause die minimale Läuterzeit für den Sudabschnitt erreicht werden kann.

Bei dem in Fig. 13 dargestellten Zeitablauf der Vorderwürze sind drei Aktionszeitpunkte zu erkennen. Zum Zeitpunkt $T_1$ wird eine Reduktion des Volumenstromes der Läuterwürze durchgeführt und zum Zeitpunkt $T_2$ eine Absenkung des Hackwerkes eingeleitet. Zum Zeitpunkt $T_3$ wird eine weitere Absenkung des Hackwerkes durchgeführt; die Stellgröße für den Volumenstrom wird dabei konstant gehalten.

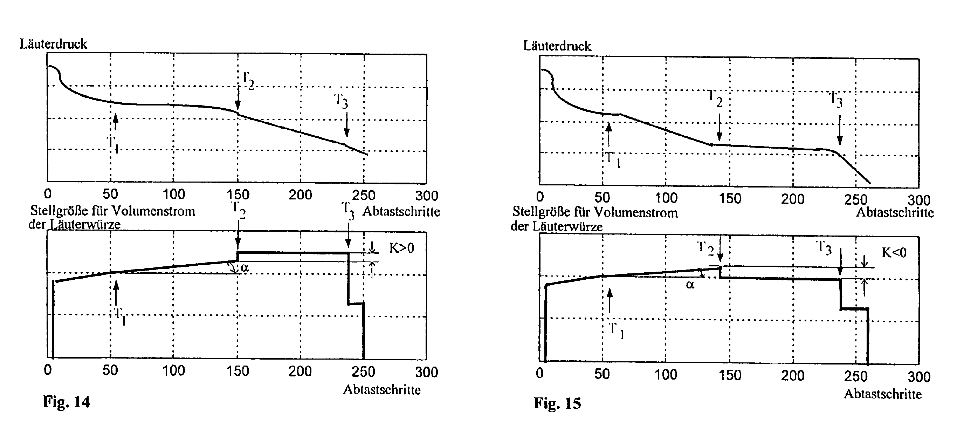

In den Abbildungen Fig. 14 bis 17 sind die zeitlichen Verläufe verschiedener Realisierungen dieser einfachen Ausführungsvariante für den Prozeßabschnitt Nachguß dargestellt.

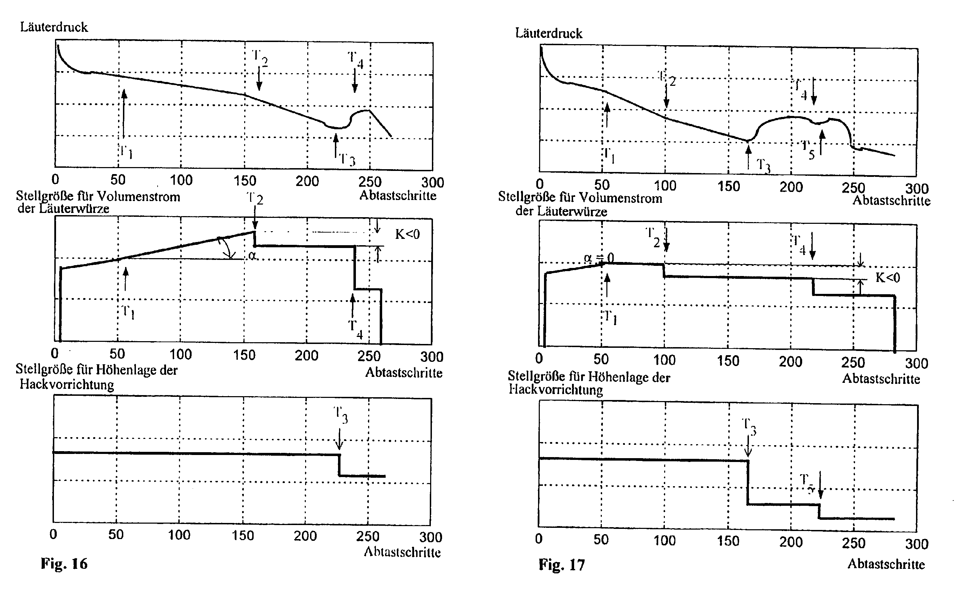

Zu Beginn dieses Prozeßabschnittes wird die Stellgröße für den Volumenstrom der Läuterwürze kontinuierlich oder stufenförmig erhöht. Innerhalb dieses Zeitraumes werden zudem die Parameter des Modelles für den Prozeßabschnitt Nachguß adaptiert. Im ersten Aktionszeitpunkt $T_1$, der z. B. durch ein vorgebbares Läutervolumen ab Beginn des Nachgusses bestimmt ist, wird mittels der dargestellten Optimierungsstrategie eine optimale Änderungsgeschwindigkeit der Stellgröße für den Volumenstrom der Läuterwürze im Sinne des gewählten Kriteriums abgeschätzt. Diese Änderungsgeschwindigkeit wird bei einem gegebenen Zeitmaßstab durch den in den in Fig. 14 bis 17 dargestellten Winkel $\alpha$ repräsentiert. Hierbei gilt: $\alpha \geq 0$. Bei guter Malzqualität des aktuellen Sudes ergibt sich in der Regel ein großer Wert dieses Steigungswinkels und umgekehrt. Der Aktionszeitpunkt $T_2$ wird z.B. bestimmt durch das abgeläuterte Volumen seit Beginn des Prozeßabschnittes Nachguß oder durch einen Grenzwert für den Läuterdruck bzw. dessen zeitliche Ableitung. Zu diesem Zeitpunkt wird wiederum eine optimale Änderung der Stellgröße für den Volumenstrom der Läuterwürze in der Funktionskomponente "Optimierungsstrategie für Stellgrößenberechnung" ermittelt. Dieser Wert wird in den Fig. 14 bis 17 mit K gekennzeichnet. Zum Aktionszeitpunkt $T_3$ wird in den Fig. 14 und 15 eine Absenkung des Volumenstromes der Läuterwürze als optimaler Stelleingriff ermittelt. In den Fig. 16 und 17 wird hingegen als optimaler Eingriff eine Absenkung der Höhenlage der Hackvorrichtung durchgeführt. Bei den letztgenannten beiden Realisierungen wird weiterhin zum Aktionszeitpunkt $T_4$ eine Absenkung des Volumenstromes der Läuterwürze vorgenommen. Zudem erfolgt zum Zeitpunkt $T_5$ bei der Realisierung gemäß Fig. 17 eine weitere Absenkung der Höhenlage der Hackvorrichtung.

Die Regelmethodik gemäß der Erfindung verhält sich wie ein stets lernender menschlicher Experte. Sie zeichnet sich durch verbessertes Regelverhalten auch bei schwankender Rohstoffqualität und hohe Flexibilität aus. Für die verschiedenen Prozeßabschnitte können unterschiedliche Kriterien für die Optimierung der Stellgrößenberechnung verwendet werden, z.B. minimale Läuterzeit für die Vorderwürze und hohe Ausbeute beim Nachguß. Darüber hinaus kann die Zeitdauer für die Inbetriebnahme und Optimierung von Läuterbottichen hiermit wesentlich verkürzt werden, da Simulationsdaten ähnlicher Läuterprozesse zum Vortraining des Reglers genutzt werden können.

**EP 0 987 322 B1**

**Patentansprüche**

1. Verfahren zum Regeln des Würzeabflusses aus einem Läuterbottich, bei welchem

   1.1) Verfahrensparameter des Läuterprozesses durch konstruktive Daten, Expertenwissen, theoretische Analyse und/oder dynamische Auswertung von gemessenen Werten der Stellgrößen, Messgrößen und Ausgangsgrößen des Prozesses gewonnen werden;
   1.2) diese Verfahrensparameter zur Beschreibung von mathematischen Gleichungen des Prozessverhaltens in Form eines Modells genutzt werden, durch das wenigstens eine Messgröße und wenigstens eine Stellgröße des Läuterbottichs mit wenigstens einer messbaren Ausgangsgrößen desselben verknüpft werden;
   1.3) während des Läuterprozesses die Messgrößen und Ausgangsgrößen zeitweise erfasst werden;
   1.4) zu programmierter Zeit ein Vergleich von errechneten Schätzwerten der Ausgangsgrößen, welche Lösungen der Gleichungen des Modells sind, und den gemessenen Ausgangsgrößen durchgeführt wird sowie danach bei Überschreiten einer vorgebbaren maximalen Abweichung der Schätzwerte von den gemessenen Ausgangsgrößen die Parameter der Gleichungen so geändert werden, dass die Schätzwerte den zugeordneten Ausgangsgrößen jeweils angenähert werden (Modellanpassung);
   1.5) in vorgebbaren Aktionzeitpunkten daraus eine oder mehrere Stellgrößen berechnet und ausgegeben werden.

2. Verfahren zum Regeln des Würzeabflusses aus einem Läuterbottich, bei welchem

   2.1) während des Läuterprozesses die Messgrößen zeitweise erfasst werden;
   2.2) in Aktionszeitpunkten von einer Rechnerschaltung aufgrund von Erfahrungswerten aus vorhergegangenen Suden wenigstens eine Stellgröße ausgegeben wird;
   2.3) diese Stellgröße bis zum nächsten Aktionszeitpunkt beibehalten oder mit konstanter Änderungsgeschwindigkeit verändert wird;
   2.4) beim nächsten Aktionszeitpunkt die Güte der anstehenden Stellgrößen anhand eines vorgebbaren Optimierungskriteriums unter Berücksichtigung der zugeordneten Ausgangsgrößen beurteilt werden;
   2.5) und gegebenenfalls dann eine Veränderung der Stellgrößen auch unter Verwendung der Ergebnisse vorhergehender Sude im Sinne dieses Kriteriums durchgeführt wird.

3. Verfahren nach Anspruch 1, bei dem nicht aus den Schätzwerten in vorgebbaren Aktionszeitpunkten eine oder mehrere Stellgrößen berechnet und ausgegeben werden sondern

   3.1) in Aktionszeitpunkten von der Rechnerschaltung aufgrund von selbsttätig gezielt durchgeführten Variationen der Werte von wenigstens einer Stellgröße zukünftige gemessene Werte von wenigstens einer Ausgangsgröße mittels des Modells prognostiziert und anhand eines vorgebbaren Optimierungskriteriums beurteilt werden;
   3.2) die im Sinne dieses Kriteriums optimalen Werte einer oder mehrerer Stellgrößen ausgegeben werden.

4. Verfahren nach einem der Ansprüche 1 bis 3, bei dem für die verschiedenen Prozessabschnitte des Läuterprozesses unterschiedliche Rechenprogramme und unterschiedliche zugehörige Optimierungskriterien gewählt werden.

5. Verfahren nach einem der Ansprüche 1 bis 4, bei dem für die verschiedenen Prozessabschnitte des Läuterprozesses Optimierungskriterien gemäß

$$\text{Gl. (5)} \qquad J = \sum_{j=1}^{M} d_j\ f_j^2(k)$$

gewählt werden.

6. Verfahren nach einem der Ansprüche 1 bis 5, bei dem für die Berechnung der Stellgrößenwerte auf die Erfahrungswerte und das Vortraining bei vergleichbaren Suden aus der Vergangenheit unter Verwendung eines selbstlernenden Reglers mittels eines neuronalen Netzes zurückgegriffen wird.

7. Verfahren nach einem der Ansprüche 1 bis 6, bei dem eine oder mehrere messbare Ausgangsgrößen (Läuterdruck, Trübung und die Konzentration der Läuterwürze) durch die Stellgröße für den Volumenstrom oder Stellgrößen für Teilvolumenströme der Läuterwürze und/oder die Stellgrößen für die Höhenlage und Drehzahl der Hackvorrichtung verändert werden.

8. Verfahren nach einem der Ansprüche 1 bis 3, bei dem die Aktionszeitpunkte frei wählbar sind oder aufgrund von Grenzwerten von wenigstens einer Messgröße oder Ausgangsgröße und/oder zeitlichen Ableitungen von wenigstens einer Messgröße oder Ausgangsgröße bestimmt werden.

9. Verfahren nach einem der Ansprüche 1 bis 6, bei dem die zu den Aktionszeitpunkten ausgegebenen Stellgrößen bis zum nächsten Aktionszeitpunkt konstant sind oder mit konstanter Steigung anwachsen bzw. abfallen.

10. Verfahren nach einem der Ansprüche 1 bis 3, bei dem die Messgrößen und messbaren Ausgangsgrößen in äquidistanten Zeitabschnitten ermittelt werden.

11. Verfahren nach Anspruch 1 oder 3, bei dem die Beschreibung des Läuterprozesses durch mathematische Gleichungen in Form von zeitdiskreten Differenzengleichungen entsprechend dem Satz von Gleichungen

Gl. (2)

$$\hat{y}_1(k) = g_1\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_1(k-1), \hat{y}_1(k-2)...\}$$

$$\hat{y}_2(k) = g_2\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_2(k-1), \hat{y}_2(k-2)...\}$$

$$\hat{y}_3(k) = g_3\{u_1(k), u_1(k-1), u_1(k-2),...u_2(k), u_2(k-1), u_2(k-2),...u_3(k), u_3(k-1), u_3(k-2),...$$
$$_1(k), w_1(k-1), w_1(k-2),...w_2(k), w_2(k-1), w_2(k-2),...w_q(k), w_q(k-1), w_q(k-2),..., \hat{y}_3(k-1), \hat{y}_3(k-2)...\}$$

erfolgt.

12. Verfahren nach Anspruch 1, bei dem die Modellanpassung durch Minimierung einer Gütefunktion gemäß

$$\text{Gl. (3)} \qquad I(T_1) = \sum_{N_1}^{N_2} \left( c_1 e_1^2(k) + c_2 e_2^2(k) + c_3 e_3^2(k) \right)$$

erfolgt.

13. Verfahren nach Anspruch 1, bei dem die neuesten Schätzwerte der anzupassenden Parameter des Läuterprozesses durch eine Schätzung gemäß

$$\text{Gl. (4)} \qquad \mathbf{b}(T_1) = \mathbf{b}(T_2) - r \frac{\partial I(T_1)}{\partial \mathbf{b}} \qquad r > 0$$

ermittelt werden.

14. Verfahren nach einem der Ansprüche 1 bis_3, bei dem zeitdiskrete Differenze gleichungen entsprechend dem Satz von Gleichungen

Gl. (2)

$$\hat{y}_1(k) = g_1\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_1(k-1), \hat{y}_1(k-2)...\}$$

$$\hat{y}_2(k) = g_2\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_2(k-1), \hat{y}_2(k-2)...\}$$

$$\hat{y}_3(k) = g_3\{u_1(k), u_1(k-1), u_1(k-2),...u_2(k), u_2(k-1), u_2(k-2),...u_3(k), u_3(k-1), u_3(k-2),...$$
$$_1(k), w_1(k-1), w_1(k-2),...w_2(k), w_2(k-1), w_2(k-2),...w_q(k), w_q(k-1), w_q(k-2),..., \hat{y}_3(k-1), \hat{y}_3(k-2)...\}$$

zur Prognose des zukünftigen Verlaufes der meßbaren Ausgangsgrößen verwendet werden.

**Claims**

1. A method for regulating the outflow of wort from a lauter tun, in which

   1.1) process parameters of the lautering process are obtained by construction data, expert knowledge, theoretical analysis and/or dynamic evaluation of measured values of the correcting variables, measured variables and starting variables of the process;
   1.2) these process parameters are utilised to describe mathematical equations of the process behaviour in the form of a model, by means of which at least one measured variable and at least one correcting variable of the lauter tun is linked with at least one measurable starting variable thereof;
   1.3) during the lautering process the measured variables and starting variables are detected at times;
   1.4) at a programmed time a comparison of calculated estimated values of the starting variables, which are solutions to the equations of the model, and the measured starting variables is carried out and also thereafter upon exceeding a pre-settable maximum deviation of the estimated values from the measured starting variables the parameters of the equations are changed such that the estimated values are in each case caused to approach the associated starting variables (model fitting);
   1.5) one or more correcting variables is/are calculated therefrom and output at pre-settable action times.

2. A method for regulating the outflow of wort from a lauter tun, in which

   2.1) during the lautering process the measured variables are detected at times;
   2.2) at action times at least one correcting variable is output by a computer circuit on the basis of experimental values from preceding brews;
   2.3) this correcting variable is retained until the next action time or is changed at a constant rate of change;
   2.4) at the next action time the quality of the correcting variables to be dealt with is assessed using a pre-settable optimisation criterion taking into account the associated starting variables;
   2.5) and optionally then a change to the correcting variables is effected also using the results of preceding brews in accordance with this criterion.

3. A method according to Claim 1, in which at pre-settable action times one or more correcting variables is calculated and output not from the estimated values but

   3.1) at action times future measured values of at least one starting variable are predicted by means of the model and are assessed using a pre-settable optimisation criterion by the computer circuit on the basis of automatically specifically performed variations of the values of at least one correcting variable;
   3.2) the values of one or more correcting variables which are optimal in accordance with this criterion are output.

4. A method according to one of Claims 1 to 3, in which different computer programs and different associated optimisation criteria are selected for the various process sections of the lautering process.

5. A method according to one of Claims 1 to 4, in which optimisation criteria are selected for the various process sections of the lautering process according to

$$\text{Eq. (5)} \qquad J = \sum_{j=1}^{M} d_j \ f_j^2(k)$$

6. A method according to one of Claims 1 to 5, in which the experimental values and the pre-training for comparable brews from the past are utilised for calculating the correcting variable values using a self-learning regulator by means of a neural network.

7. A method according to one of Claims 1 to 6, in which one or more measurable starting variables (lauter pressure, turbidity and the concentration of the lautering wort) are changed by the correcting variable for the volumetric flow rate or correcting variables for partial volumetric flow rates of the lautering wort and/or the correcting variables for the vertical position and speed of the raking device.

8. A method according to one of Claims 1 to 3, in which the action times are freely selectable or are determined on the basis of limit values of at least one measured variable or starting variable and/or derivations over time of at least one measured variable or starting variable.

9. A method according to one of Claims 1 to 6, in which the correcting variables output at the action times are constant until the next action time or increase or decrease with a constant gradient.

10. A method according to one of Claims 1 to 3, in which the measured variables and measurable starting variables are determined at equidistant time periods.

11. A method according to Claim 1 or 3, in which the description of the lautering process takes place by mathematical equations in the form of time-discrete differential equations corresponding to the set of equations

$$\hat{y}_1(k) = g_1 \{ u_1(k), u_1(k-1), u_1(k-2), \ldots u_2(k), u_2(k-1), u_1(k-2), \ldots u_3(k), u_3(k-1), u_3(k-2), \ldots$$
$$w_1(k), w_1(k-1), w_1(k-2), \ldots w_2(k), w_2(k-1), w_2(k-2), \ldots w_4(k), w_4(k-1), w_4(k-2), \ldots, \hat{y}_1(k-1), \hat{y}_1(k-2) \ldots \}$$

$$\hat{y}_2(k) = g_2 \{ u_1(k), u_1(k-1), u_1(k-2), \ldots u_2(k), u_2(k-1), u_2(k-2), \ldots u_3(k), u_3(k-1), u_3(k-2), \ldots$$
$$w_1(k), w_1(k-1), w_1(k-2), \ldots w_2(k), w_2(k-1), w_2(k-2), \ldots w_4(k), w_4(k-1), w_4(k-2), \ldots, \hat{y}_2(k-1), \hat{y}_2(k-2) \ldots \}$$

$$\hat{y}_3(k) = g_3 \{ u_1(k), u_1(k-1), u_1(k-2), \ldots u_2(k), u_2(k-1), u_2(k-2), \ldots u_3(k), u_3(k-1), u_3(k-2), \ldots$$
$$_1(k), w_1(k-1), w_1(k-2), \ldots w_2(k), w_2(k-1), w_2(k-2), \ldots w_4(k), w_4(k-1), w_4(k-2), \ldots, \hat{y}_3(k-1), \hat{y}_3(k-2) \ldots \}$$

12. A method according to Claim 1, in which the model fitting takes place by minimising a quality function in accordance with

$$\text{Eq. (3)} \qquad I(T_1) = \sum_{N_1}^{N_2} \left( c_1 e_1^2(k) + c_2 e_2^2(k) + c_3 e_3^2(k) \right)$$

13. A method according to Claim 1, in which the most recent estimated values of the parameters of the lautering process which are to be adapted are determined by an estimation in accordance with

$$\text{Eq. (4)} \qquad b(T_1) = b(T_2) - r \frac{\partial I(T_1)}{\partial b} \qquad r > 0$$

**14.** A method according to one of Claims 1 to 3, in which time-discrete differential equations corresponding to the set of equations

Eq. (2)

$$\hat{y}_1(k) = g_1\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_1(k-1), \hat{y}_1(k-2)...\}$$

$$\hat{y}_2(k) = g_2\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_2(k-1), \hat{y}_2(k-2)...\}$$

$$\hat{y}_3(k) = g_3\{u_1(k), u_1(k-1), u_1(k-2),...u_2(k), u_2(k-1), u_2(k-2),...u_3(k), u_3(k-1), u_3(k-2),...$$
$$w_1(k), w_1(k-1), w_1(k-2),...w_2(k), w_2(k-1), w_2(k-2),...w_q(k), w_q(k-1), w_q(k-2),..., \hat{y}_3(k-1), \hat{y}_3(k-2)...\}$$

are used to predict the future course of the measurable starting variables.

**Revendications**

**1.** Procédé de régulation de l'extraction de moût d'une cuve-filtre selon lequel :

1.1) on recueille les paramètres de procédé de l'opération d'affinage par des données constructives, la connaissance des experts, l'analyse théorique et/ou l'exploitation dynamique de valeurs mesurées des grandeurs de réglage, des grandeurs de mesure et des grandeurs de sortie du procédé ;
1.2) on utilise ces paramètres de procédé pour décrire des équations mathématiques du comportement du procédé sous la forme d'un modèle qui combine au moins une grandeur de mesure et au moins une grandeur de réglage de la cuve-filtre à au moins une grandeur de sortie mesurable de cette même cuve ;
1.3) au cours de l'opération d'affinage, on saisit de temps en temps les grandeurs de mesure et les grandeurs de sortie ;
1.4) à des instants programmés, on compare des valeurs prévisionnelles, calculées des grandeurs de sortie qui sont des solutions des équations du modèle et les grandeurs de sortie mesurées, puis, en cas de dépassement d'un écart maximum prédéfini des valeurs prévisionnelles par rapport aux grandeurs de sortie mesurées, on modifie les paramètres des équations de façon à rapprocher les valeurs prévisionnelles des grandeurs de sortie associées respectives (adaptation du modèle) ;
1.5) à des instants d'action prédéfinis, on calcule et délivre une ou plusieurs grandeurs de réglage.

**2.** Procédé de régulation de l'extraction de moût d'une cuve filtre,
selon lequel :

2.1) au cours de l'opération d'affinage, on saisit de temps en temps les grandeurs de mesure ;
2.2) à des instants d'action, un circuit de calculateur émet au moins une grandeur de réglage à partir de valeurs empiriques issues de décoctions précédentes ;
2.3) on conserve cette grandeur de réglage jusqu'à l'instant d'action suivant ou on la modifie à une vitesse de variation constante ;
2.4) à l'instant d'action suivant, on juge de la qualité des grandeurs de réglage présentes à l'aide d'un critère d'optimisation prédéfini en tenant compte des grandeurs de sortie associées ;
2.5) le cas échéant, on effectue une modification des grandeurs de réglage en utilisant également les résultats de décoctions précédentes dans le sens de ce critère.

**3.** Procédé selon la revendication 1,
selon lequel :

on ne calcule et on ne délivre pas une ou plusieurs grandeurs de réglage à partir des valeurs prévisionnelles à des instants d'action prédéfinis pour émettre ces grandeurs de réglage ; mais

3.1) à des instants d'action, le circuit de calcul évalue par pronostic au moyen du modèle des valeurs mesurées futures d'au moins une grandeur de sortie à partir de variations effectuées de manière ciblée d'au moins une grandeur de réglage et juge ces valeurs à l'aide d'un critère d'optimisation prédéfini ;

3.2) on délivre les valeurs optimales dans le sens de ce critère pour une ou plusieurs grandeurs de réglage.

**4.** Procédé selon l'une des revendications 1 à 3, selon lequel :

pour les différentes étapes du procédé d'affinage, on sélectionne des programmes de calculs différents et des critères d'optimisation correspondants différents.

**5.** Procédé selon l'une des revendications 1 à 4, selon lequel :

pour les différentes étapes du procédé d'affinage, on sélectionne des critères d'optimisation selon l'équation suivante :

$$\text{Eq. (5)} \qquad J = \sum_{j=1}^{M} d_j\, f_j^{\,2}\,(k)$$

**6.** Procédé selon l'une des revendications 1 à 5, selon lequel :

pour le calcul des valeurs des grandeurs de réglage, on s'appuie sur des valeurs empiriques et sur des essais préalables pour des décoctions antérieures comparables en utilisant un régulateur expert à l'aide d'un réseau neuronal.

**7.** Procédé selon l'une des revendications 1 à 6, selon lequel :

on modifie une ou plusieurs grandeurs de sortie mesurables (pression du bain de purification, turpitude et concentration du moût d'affinage par la grandeur de réglage pour le débit volumique ou par les grandeurs de réglage de débits volumiques partiels du moût d'affinage et/ou les grandeurs de réglage pour le niveau et la vitesse de rotation du dispositif hacheur.

**8.** Procédé selon l'une des revendications 1 à 3, selon lequel :

on sélectionne librement les instants d'action ou on les détermine à partir des valeurs limites d'au moins une grandeur de mesure ou une grandeur de sortie et/ou des dérivées en fonction du temps d'au moins l'une de ces grandeurs de mesure ou grandeurs de sortie.

**9.** Procédé selon l'une des revendications 1 à 6, selon lequel :

les grandeurs de réglage délivrées aux instants d'action sont constantes jusqu'à l'instant d'action suivant ou augmentent ou diminuent avec une pente constante.

**10.** Procédé selon l'une des revendications 1 à 3, selon lequel :

on détermine les grandeurs de mesure et les grandeurs de sortie mesurables à des intervalles de temps équidistants.

**11.** Procédé selon l'une des revendication 1 ou 3,

selon lequel :

la description de l'opération d'affinage se fait par des équations mathématiques sous la forme d'équations différentielles discrètes dans le temps correspondant au jeu d'équations suivantes :

Eq. (2)

$$\hat{y}_1\,(k) = g_1\,\{u_1\,(k),\ u_1\,(k{-}1),\ u_1\,(k{-}2),\dots u_2\,(k),\ u_2\,(k{-}1),\ u_2\,(k{-}2),\dots u_3\,(k),\ u_3\,(k{-}1),\ u_3\,(k{-}2),\dots$$

$$w_1\,(k),\ w_1\,(k{-}1),\ w_1\,(k{-}2),\dots w_2\,(k),\ w_2\,(k{-}1),\ w_2\,(k{-}2),\dots w_q\,(k),\ w_q\,(k{-}1),\ w_q\,(k{-}2),\dots,\ \hat{y}_1\,(k{-}1),\ \hat{y}_1\,(k{-}2)\dots\}$$

$$\hat{y}_2\,(k) = g_2\,\{u_1\,(k),\ u_1\,(k{-}1),\ u_1\,(k{-}2),\dots u_2\,(k),\ u_2\,(k{-}1),\ u_2\,(k{-}2),\dots u_3\,(k),\ u_3\,(k{-}1),\ u_3\,(k{-}2),\dots$$

$$w_1\,(k),\ w_1\,(k{-}1),\ w_1\,(k{-}2),\dots w_2\,(k),\ w_2\,(k{-}1),\ w_2\,(k{-}2),\dots w_q\,(k),\ w_q\,(k{-}1),\ w_q\,(k{-}2),\dots,\ \hat{y}_2\,(k{-}1),\ \hat{y}_2\,(k{-}2)\dots\}$$

$$\hat{y}_3\,(k) = g_3\,\{u_1\,(k),\ u_1\,(k{-}1),\ u_1\,(k{-}2),\dots u_2\,(k),\ u_2\,(k{-}1),\ u_2\,(k{-}2),\dots u_3\,(k),\ u_3\,(k{-}1),\ u_3\,(k{-}2),\dots$$

$$w_1\,(k),\ w_1\,(k{-}1),\ w_1\,(k{-}2),\dots w_2\,(k),\ w_2\,(k{-}1),\ w_2\,(k{-}2),\dots w_q\,(k),\ w_q\,(k{-}1),\ w_q\,(k{-}2),\dots,\ \hat{y}_3\,(k{-}1),\ \hat{y}_3\,(k{-}2)\dots\}$$

**12.** Procédé selon la revendication 1,
selon lequel :

l'adaptation du modèle se fait en minimisant une fonction de qualité selon l'équation suivante :

$$\text{Eq. (3)} \qquad I(T_1) = \sum_{N_1}^{N_2}\left(c_1\,e_1^2\,(k) + c_2\,e_2^2\,(k) + c_3\,e_3^2\,(k)\right)$$

**13.** Procédé selon la revendication 1,
selon lequel :

les valeurs prévisionnelles les plus récentes des paramètres à adapter pour le procédé d'affinage se déterminent par une estimation selon l'équation suivante :

$$\text{Eq. (4)} \qquad b(T_1) = b(T_2) - r\,\frac{\partial I(T_1)}{\partial b} \qquad r > 0$$

**14.** Procédé selon l'une des revendications 1 à 3,
selon lequel :

on utilise des équations différentielles discrètes dans le temps selon le jeu d'équations suivantes :

Eq. (2)

$$\hat{y}_1(k) = g_1 \{u_1(k), u_1(k-1), u_1(k-2),\ldots u_2(k), u_2(k-1), u_2(k-2),\ldots u_3(k), u_3(k-1), u_3(k-2),\ldots$$

$$w_1(k), w_1(k-1), w_1(k-2),\ldots w_2(k), w_2(k-1), w_2(k-2),\ldots w_q(k), w_q(k-1), w_q(k-2),\ldots, \hat{y}_1(k-1), \hat{y}_1(k-2)\ldots\}$$

$$\hat{y}_2(k) = g_2 \{u_1(k), u_1(k-1), u_1(k-2),\ldots u_2(k), u_2(k-1), u_2(k-2),\ldots u_3(k), u_3(k-1), u_3(k-2),\ldots$$

$$w_1(k), w_1(k-1), w_1(k-2),\ldots w_2(k), w_2(k-1), w_2(k-2),\ldots w_q(k), w_q(k-1), w_q(k-2),\ldots, \hat{y}_2(k-1), \hat{y}_2(k-2)\ldots\}$$

$$\hat{y}_3(k) = g_3 \{u_1(k), u_1(k-1), u_1(k-2),\ldots u_2(k), u_2(k-1), u_2(k-2),\ldots u_3(k), u_3(k-1), u_3(k-2),\ldots$$

$$w_1(k), w_1(k-1), w_1(k-2),\ldots w_2(k), w_2(k-1), w_2(k-2),\ldots w_q(k), w_q(k-1), w_q(k-2),\ldots, \hat{y}_3(k-1), \hat{y}_3(k-2)\ldots\}$$

pour le pronostic de l'évolution future des grandeurs de sortie mesurables.

**Fig. 1**

Anschwänzwasser und Trub

Läuterwürze

Maischbottich

EP 0 987 322 B1

**Fig. 2**

Anschwänzwasser und Trub

Läuterwürze

Maischbottich

22

EP 0 987 322 B1

**Fig. 3**

Realer Läuterprozeß

Stellglied 1

Stellglied 2

Stellglied 3

Datenerfassungseinheit

Datenerfassungseinheit

Stellgrößen-berechnung

Dynamisches Modell des Läuterprozesses

Teilfunktion die innerhalb der Automatisierungsvorrichtung realisiert ist

$y_1$, $y_2$, $y_3$

$e_1$, $e_2$, $e_3$

$\hat{y}_1$, $\hat{y}_2$, $\hat{y}_3$

$w_1$, $w_2$ .... $w_q$

$x_1$, $x_2$, $x_3$

$u_1$, $u_2$, $u_3$

# Fig. 4

Volumenstrom Anschwänzwasser

Volumenstrom Trub

Konzentration Trub

Temperatur Läuterwürze

Temperatur Anschwänzwasser

Konzentration Läuterwürze

Stellgröße für Volumenstrom Läuterwürze

Stellgröße für Höhenlage der Hackvorrichtung

Dichte Anschwänzwasser

Dichte Trub

Dichte-berechnung

Dichte Läuterwürze

Berechnung Änderung des statischen Drucks

Integration

Berechnung des Differenzdruckes

Parameteranpassung

Schätzwert des Läuterdruckes

EP 0 987 322 B1

24

Läuterdruck

Trübung Läuterwürze

Konzentration Läuterwürze

Volumenstrom Anschwänzwasser

Volumenstrom Trub

Konzentration Trub

Temperatur Läuterwürze

Temperatur Anschwänzwasser

Status- und Hilfssignale

$y_1$
$y_2$
$y_3$
$w_1$
$w_4$
$w_5$
$w_2$
$w_3$

Dynamisches Modell des Läuterprozesses

$\hat{y}_3$
$\hat{y}_2$
$\hat{y}_1$

$e_3$
$e_2$
$e_1$

Lernstrategie zur Modell-anpassung

Anzupassende Parameter

$u_1$  $u_2$  $u_3$

**Fig. 5**

EP 0 987 322 B1

Läuterdruck

Trübung Läuterwürze

Konzentration Läuterwürze

Volumenstrom Anschwänzwasser

Volumenstrom Trub

Konzentration Trub

Temperatur Läuterwürze

Temperatur Anschwänzwasser

Status- und Hilfssignale

$y_1$

$y_2$

$y_3$

$w_1$

$w_4$

$w_5$

$w_2$

$w_3$

**Fig. 6**

Dynamisches Modell
des Läuterprozesses

$\hat{y}_3$

$\hat{y}_2$

$\hat{y}_1$

Aktuelle Werte der Stellgrößen {

Zukünftige Werte der Stellgrößen {

$u_1$  $u_2$  $u_3$

$\tilde{u}_1$  $\tilde{u}_2$  $\tilde{u}_3$

$\tilde{y}_1$  $\tilde{y}_2$  $\tilde{y}_3$

Optimierungsstrategie für
Stellgrößenberechnung

Status- und Hilfssignale

$x_1$

$x_2$

$x_3$

$u_3$  $u_2$  $u_1$

EP 0 987 322 B1

Fig. 7

Läuterdruck

Trübung Läuterwürze

Konzentration Läuterwürze

Volumenstrom Anschwänzwasser

Volumenstrom Trub

Konzentration Trub

Temperatur Läuterwürze

Temperatur Anschwänzwasser

Status- und Hilfssignale

Aktuelle Werte der Stellgrößen

Zukünftige Werte der Stellgrößen

Konzentration bzw. Leitwert Ringleitung 1

Konzentration bzw. Leitwert Ringleitung 2

Lernstrategie zur Modell-anpassung

Dynamisches Modell des Läuterprozesses

Optimierungs-strategie für Stellgrößenberechnung

Stellgrößenaufteilung auf die Ringrohre

Status- und Hilfssignale

Fig. 8

Läuterdruck

Trübung Läuterwürze

Konzentration Läuterwürze

Volumenstrom Anschwänzwasser

Volumenstrom Trub

Konzentration Trub

Status- und Hilfssignale

$y_1$
$y_2$
$y_3$

$w_1$
$w_4$
$w_5$

$x_1$
$x_2$
$x_3$

Optimierungsstrategie für
Stellgrößenberechnung

Stellgrößenaufteilung
auf die Ringrohre

Konzentration
bzw. Leitwert
Ringleitung 1

Konzentration
bzw. Leitwert
Ringleitung 2

$u_3$   $u_2$   $u_1$

$u_{1,1}$   $u_{1,2}$

**Fig. 7 a**

EP 0 987 322 B1

Läuterdruck

Trübung Läuterwürze

Konzentration Läuterwürze

Volumenstrom Anschwänzwasser

Volumenstrom Trub

Konzentration Trub

Status- und Hilfssignale

$y_1$

$y_2$

$y_3$

$w_1$

$w_4$

$w_5$

$x_{1,2}$

$x_{1,1}$

$x_2$

$x_3$

Optimierungsstrategie für
Stellgrößenberechnung

Konzentration
bzw. Leitwert
Ringleitung 1

Konzentration
bzw. Leitwert
Ringleitung 2

$u_3$   $u_2$

$u_{1,1}$   $u_{1,2}$

**Fig. 8 a**

EP 0 987 322 B1

Fig. 9

Läuterdruck

modellierter Verlauf

Gemessener Verlauf

0    50    100    150    200    250    300    350

Abtastschritte

**Fig. 10**

Konzentration der Läuterwürze

modellierter Verlauf

Gemessener Verlauf

0    100    200    300    400    500    600    700

Abtastschritte

**Fig. 11**

EP 0 987 322 B1

Fig. 13

Fig. 12

Läuterdruck

$T_2$

$T_3$

$T_1$

0    50    100    150    200    250    300

Stellgröße für Volumenstrom
der Läuterwürze

$T_2$    $T_3$  Abtastschritte

$K>0$

α

$T_1$

0    50    100    150    200    250    300

Abtastschritte

**Fig. 14**

Läuterdruck

$T_2$

$T_3$

$T_1$

0    50    100    150    200    250    300

Stellgröße für Volumenstrom
der Läuterwürze

Abtastschritte

$T_2$    $T_3$    $K<0$

α

$T_1$

0    50    100    150    200    250    300

Abtastschritte

**Fig. 15**

EP 0 987 322 B1

Fig. 17

Fig. 16

35

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0362793 A
- DE 4324157 A1
- DD 139480
- DE 3844389 C1
- DE 19610447 A1